# EUROPEAN PATENT SPECIFICATION

(11) **EP 3 707 875 B1**
(45) Date of publication and mention of the grant of the patent: **14.06.2023**
(21) Application number: 18807446.2
(22) Date of filing: 12.11.2018
(51) Int. Cl.: H04L 69/04, H04L 69/24, H04W 28/02

(54) **TRANSMITTING DEVICE, RECEIVING DEVICE, AND METHODS PERFORMED THEREIN FOR HANDLING UPLINK DATA COMPRESSION**
SENDEVORRICHTUNG, EMPFANGSVORRICHTUNG UND DARIN AUSGEFÜHRTE VERFAHREN ZUR BEHANDLUNG VON UPLINK-DATENKOMPRESSION
DISPOSITIF D'ÉMISSION, DISPOSITIF DE RÉCEPTION ET PROCÉDÉS MIS EN OEUVRE DANS CEUX-CI POUR GÉRER UNE COMPRESSION DE DONNÉES DE LIAISON MONTANTE

(30) Priority: 10.11.2017 US 201762584174 P
(43) Date of publication of application: 16.09.2020
(73) Proprietor: Telefonaktiebolaget LM Ericsson (Publ), 164 83 Stockholm (SE)
(72) Inventor: SHREEVASTAV, Ritesh, SE-194 47 Upplands Väsby (SE); BERGSTRÖM, Mattias, SE-19270 Sollentuna (SE)
(74) Representative: Ericsson
(86) International application number: PCT/SE2018/051149
(87) International publication number: WO 2019/093960

(56) References cited:
- EP-A1- 3 219 079
- US-A1- 2008 123 655
- US-A1- 2013 135 987
- CATT: "Update of Description and Evaluation Results for Deflate", 3GPP DRAFT; 36 754_CR0002_(REL-15)_R2-1708359, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051317373, Retrieved from the Internet: URL:http://www.3gpp.org/ftp/Meetings_3GPP_ SYNC/RAN2/Docs/ [retrieved on 2017-08-20]

## Description

### TECHNICAL FIELD

The present disclosure relates generally to a transmitting device and methods performed thereby for handling uplink data compression. The present disclosure also relates generally to a receiving device and methods performed thereby for handling uplink data compression.

### BACKGROUND

Communication devices within a wireless communications network may be wireless devices such as e.g., User Equipments (UEs), stations (STAs), mobile terminals, wireless terminals, terminals, and/or Mobile Stations (MS). Wireless devices are enabled to communicate wirelessly in a cellular communications network or wireless communication network, sometimes also referred to as a cellular radio system, cellular system, or cellular network. The communication may be performed e.g., between two wireless devices, between a wireless device and a regular telephone, and/or between a wireless device and a server via a Radio Access Network (RAN) , and possibly one or more core networks, comprised within the wireless communications network. Wireless devices may further be referred to as mobile telephones, cellular telephones, laptops, or tablets with wireless capability, just to mention some further examples. The wireless devices in the present context may be, for example, portable, pocket-storable, hand-held, computer-comprised, or vehicle-mounted mobile devices, enabled to communicate voice and/or data, via the RAN, with another entity, such as another terminal or a server.

Communication devices may also be network nodes, such as radio network nodes, e.g., Transmission Points (TP). The wireless communications network covers a geographical area which may be divided into cell areas, each cell area being served by a network node such as a Base Station (BS), e.g., a Radio Base Station (RBS), which sometimes may be referred to as e.g., a gNB, evolved Node B ("eNB"), "eNodeB", "NodeB", "B node", or BTS (Base Transceiver Station), depending on the technology and terminology used. The base stations may be of different classes such as e.g., Wide Area Base Stations, Medium Range Base Stations, Local Area Base Stations and Home Base Stations, based on transmission power and thereby also cell size. A cell is the geographical area where radio coverage is provided by the base station at a base station site. One base station, situated on the base station site, may serve one or several cells. Further, each base station may support one or several communication technologies. The wireless communications network may also be a non-cellular system, comprising network nodes which may serve receiving nodes, such as wireless devices, with serving beams. In 3rd Generation Partnership Project (3GPP) Long Term Evolution (LTE), base stations, which may be referred to as eNodeBs or even eNBs, may be directly connected to one or more core networks. In the context of this disclosure, the expression Downlink (DL) may be used for the transmission path from the base station to the wireless device. The expression Uplink (UL) may be used for the transmission path in the opposite direction i.e., from the wireless device to the base station.

A work on Uplink Data Compression (UDC) in LTE has been brought in Release (Rel)-15 of LTE [5]. The motivation for this work item is that the air interface may get congested and hence it may, in some scenarios, be beneficial to compress the data in Uplink before it may be sent over the air interface.

The proposed solution is that in the Packet Data Convergence Protocol (PDCP) layer of LTE it is introduced the possibility to compress Service Data Units (SDUs) at the transmitter. The receiver may then, upon reception of a packet, decompress the data and forward the result to higher layers. The compression solution is based upon "DEFLATE" [1,3].

Compression may be either lossless or lossy. In Lossless compression, the receiver may be able to reconstruct the packet exactly as how it was in the sender. In lossy compression, there may be some loss, but the receiver may still interpret the data; although this may not be the exact copy of the original. DEFLATE is a lossless data compression algorithm that combines the table based LZ77 algorithm and Huffman encoding. The LZ77 algorithm achieves compression by replacing repeated occurrences of data with an 8 + 15 bit <*length, distance*>-pair that specifies an earlier copy of the data in the previous uncompressed data stream. The *length* parameter indicates the length of the matching copy of data, and the *distance* parameter indicates how far back in the previous uncompressed data stream the duplicate occurred. To find matches, the compressor may need to keep a certain amount of the most recent data in a sliding window buffer. In the same way, the decompressor may need to have access to the same data to be able to interpret the matches referred to in the compressed packet. For compression/de-compression to work, it may be understood to be necessary that the buffered data on the compressor and the decompressor side are synchronized; any loss of data may force the algorithm out-of-synch.

In the DEFLATE algorithm, the *length* of the matching pattern is restricted to 3-258 bytes, with a lookback length (*distance*) of maximum 32 KB. Matches may be made between any number of blocks, as long as the match occurs within the last 32 KB of the uncompressed data stream. For application to UL data compression, blocks may be interchanged with packets.

In a second compression stage, DEFLATE may compress the previously uncompressed part, that is, literal part, of the block by Huffman coding. The Huffman coding may be understood to work by replacing commonly used symbols with code shorter representations, while longer code representations may be used for less commonly used symbols. The Huffman code dictionary, also known as the Huffman tree, may be calculated based on a given alphabet and the frequency of the different symbols in the data. The DEFLATE algorithm may work with either a pre-set Huffman code dictionary, or dynamically by calculating a new Huffman tree for each block. If dynamic Huffman coding is used, the Huffman tree may be understood to be required to be included in the compressed packet. On the other hand, better compression may be expected if the tree is tailor made for each packet.

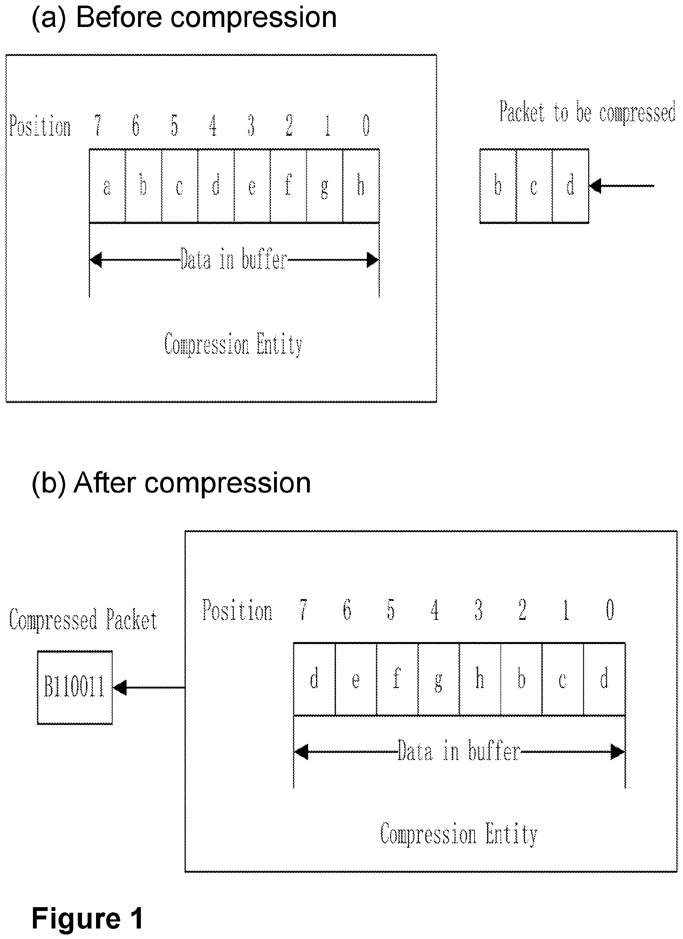

UDC algorithm based upon DEFLATE may need to have a buffer memory context on the compressor and decompressor side. For example, to perform cross-packet compression, a First-In-First-Out (FIFO) buffer may be used to buffer original packets which have been compressed. Within the packets which have not been compressed, if a repeated string in buffer is identified, a back-reference may be inserted linking it to the previous location and the length of that identified string as shown in Figure 1. Figure 1 is a schematic diagram illustrating an example of Deflate before compression in panel a), and after compression, in panel b). In Figure 1, the buffer size in the compression entity, e.g., a UE, is 8 bytes. Each byte is numbered from 0 to 7. When a new packet which has a content of "bed", as illustrated on the right side of panel a), comes in to the compression entity, a cross-packet match may be identified in the buffer, with the previous position 6, length 3. The new packet, which original length is 3 bytes, may be compressed to 6 bits, as illustrated on the left side of panel b), that is, 3 bits to identify any of the 8 positions in the buffer where the match starts, and 3 bits for length. After compression, the new packet is inserted in the buffer. The decompressor similarly has a decompression entity with same buffer content so that it may decompress the compressed packet. If decompressor and compressor buffer content is out-of-sync, it would be impossible to re-construct the original packet in the decompressor side. The decompressor thus may be understood to need to be able to inform the compressor about this sort of error scenario. After the notification, the compressor, e.g., the UE, may need to reset its buffer and attempt for compression again.

A checksum failure may be understood as an error indicating that the sender and receiver buffer are out of sync. If there are multiple checksum failures in a short interval, an eNB may decide to release the UDC configuration. To release the UDC configuration may be understood to mean to not use compression in the uplink. Similarly, the compressor, e.g., the UE, because of some software error, may point to out of memory for the decompressor, e.g., the eNB, to decompress the packet. For example, if the buffer size has been set to 2 kilobytes, that is, 2048 bytes, but the sender points to a memory size of 3000 bytes; then this is an error. In such error case, the eNB may decide to release the UDC configuration. The purpose of the UDC is to save UL bandwidth; however, if there is not any substantial compression gain achieved, the eNB may decide to release the UDC configuration.

Handling of the uplink data compression according existing methods may lead to ambiguity in the communications between the compressor and the decompressor and wastage of processing and energy resources, as well as delays.

US2013135987 discloses a method and apparatus to report packet data control protocol (PDCP) status and PDCP resets in a wireless communication, using control PDUs that may have security protection applied by ciphering of the control PDUs. Reliability of the PDCP status and reset messages may be assured by acknowledgment according to an acknowledged mode or to an unacknowledged mode.

US20080123655 discloses a method and apparatus for transmitting/receiving a ciphered packet in a mobile communication system. The apparatus and method perform a reset of a PDCP in connection with transmission/reception of a ciphered packet including a compressed header.

### SUMMARY

It is an object of embodiments herein to improve the efficiency of usage of resources in a communications network. It is a particular object of embodiments herein to improve the efficiency of usage of resources in a communications network by improving the handling of uplink data compression.

The present invention is defined by the appended independent claims. Dependent claims constitute embodiments of the invention.

### BRIEF DESCRIPTION OF THE DRAWINGS

Examples of embodiments herein are described in more detail with reference to the accompanying drawings, and according to the following description.
- Figure 1: is a schematic diagram illustrating data compression, according to existing methods.
- Figure 2: is a schematic diagram illustrating an example of a packet format with a UDC header, according to existing methods.
- Figure 3: is a schematic diagram illustrating an example of a packet format without a UDC header, according to existing methods.
- Figure 4: is a schematic diagram illustrating a communications network, according to embodiments herein.
- Figure 5: is a flowchart depicting embodiments of a method in a transmitting device, according to embodiments herein.
- Figure 6: is a schematic diagram illustrating an example of a packet format, according to embodiments herein.
- Figure 7: is a schematic diagram illustrating an example of a packet format, according to embodiments herein.
- Figure 8: is a schematic diagram illustrating an example of a packet format, according to embodiments herein.
- Figure 9: is a schematic diagram illustrating an example of a packet format, according to embodiments herein.
- Figure 10: is a flowchart depicting a method in a receiving device, according to embodiments herein.
- Figure 11: is a schematic block diagram illustrating two non-limiting examples, a) and b), of a transmitting device, according to embodiments herein.
- Figure 12: is a schematic block diagram illustrating two non-limiting examples, a) and b), of a receiving device, according to embodiments herein.
- Figure 13: is a flowchart depicting an example of a method in a transmitting device, related to embodiments herein.
- Figure 14: is a flowchart depicting an example of a method in a receiving device, related to embodiments herein.
- Figure 15: is a schematic block diagram illustrating a telecommunication network connected via an intermediate network to a host computer, according to embodiments herein.
- Figure 16: is a generalized block diagram of a host computer communicating via a base station with a user equipment over a partially wireless connection, according to embodiments herein.
- Figure 17: is a flowchart depicting embodiments of a method in a communications system including a host computer, a base station and a user equipment, according to embodiments herein.
- Figure 18: is a flowchart depicting embodiments of a method in a communications system including a host computer, a base station and a user equipment, according to embodiments herein.
- Figure 19: is a flowchart depicting embodiments of a method in a communications system including a host computer, a base station and a user equipment, according to embodiments herein.
- Figure 20: is a flowchart depicting embodiments of a method in a communications system including a host computer, a base station and a user equipment, according to embodiments herein.

### DETAILED DESCRIPTION

As part of the development of embodiments herein, one or more problems with the existing technology will first be identified and discussed.

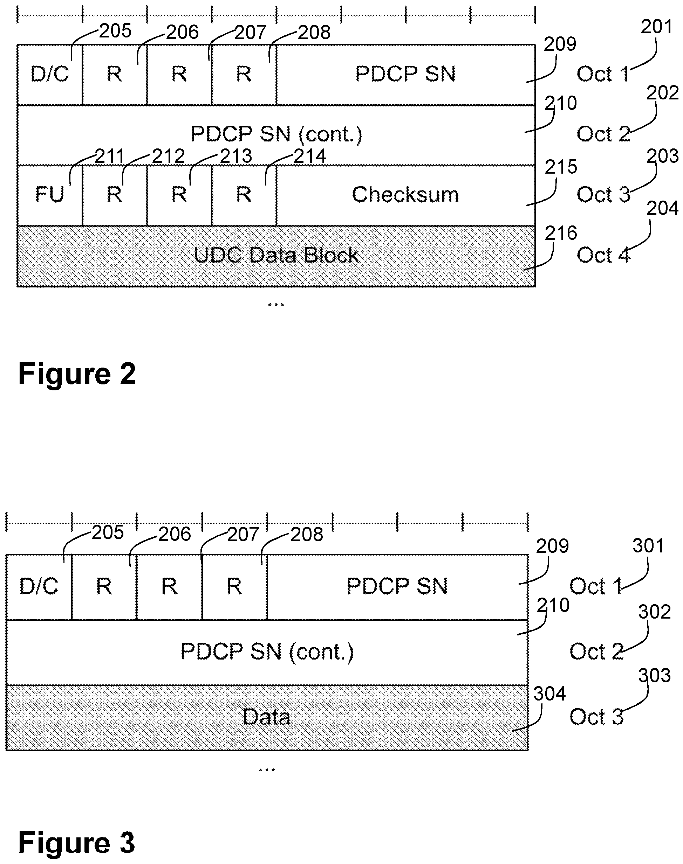

When UDC is configured, a packet format such as that depicted in Figure 2 may be used [4]. As shown in Figure 2, the packet format comprises four octets: a first octet (Oct 1) 201, a second octet (Oct 2) 202, a third octet (Oct 3) 203 and a fourth octet (Oct 4) 204. The first octet 201 comprises a Data/Control PDU (D/C) field 205, a first reserved (R) field 206, a second R field 207, a third R field 208, and a Packet Data Convergence Protocol Sequence Number (PDCP SN) field 209. The second octet 202 comprises a continuation of the PDCP SN field 210. The third octet 203 comprises a Field UDC (FU) field 211, a fourth R filed 212, a fifth R field 213, a sixth R field 214, and checksum field 215. The fourth octet 204 comprises a UDC data block 216.

When UDC is not configured, a legacy packet format without UDC header may be used instead [2,4], as depicted in **Figure 3**. This format comprises three octets: a first octet (Oct 1) 301, a second octet (Oct 2) 302, and a third octet (Oct 3) 303. As may be appreciated by comparing Figure 2 and Figure 3, the third octet is different for the two formats. After the UDC configuration is released e.g., because of an error, the compressor, e.g., a UE, may then fall back to a legacy method, that is, it may send packets without a UDC header as depicted in Figure 3. However, the decompressor, e.g., eNB would not know if the packet is still processed by the UDC entity or not. That is, the decompressor will not be able to identify if the third octet is the UDC header, that is, FU 212; R 212; R 213; R 214; Checksum 215, as shown in the first format in Figure 2, or if it is Data 304, as shown in the second format in Figure 3. Therefore, there will be ambiguity. For example, if a UE is sending compressed packets, but the eNB receiving them assumes they are legacy packets, the packets will not be uncompressed by the eNB. Thus, these compressed packets will not be readable by the application layer. Similarly, if a UE sends uncompressed packets, and the eNB receiving them assumes they are compressed packets, there will be extra processing in the eNB to try to decompress the packets. This may lead to corruption of the packets. Hence, it is advantageous to avoid this ambiguity.

Certain aspects of the present disclosure and their embodiments may provide solutions to this challenge or other challenges. There are, proposed herein, various embodiments which address one or more of the issues disclosed herein.

Embodiments herein may be understood to address this problem in existing methods by the compressor, that is, a transmitting device such as a UE, sending an indication to the decompressor, that is, a receiving device such as an eNB, indicating whether the uplink data compression, e.g., UDC, is enabled or disabled. Embodiments herein may be understood to relate to a method to provide feedback from a compressor to a decompressor for release of uplink data compression, e.g., UDC. In general terms, embodiments herein may therefore be understood to be related to a method for providing feedback for Uplink Data Compression.

Uplink data compression may be handled by another uplink data compression feature with similar functional characteristics to UDC. UDC is used herein as an illustrative example of an uplink data compression feature.

As a brief overview of embodiments herein, and taking UDC as an example of uplink data compression, if at first UDC is enabled/active, the packets that may be sent by the transmitting device may be compressed using the UDC-algorithm. When UDC is disabled/deactivated, the packets sent by the transmitting device may not be compressed using the UDC-algorithm. Upon switching from a state where UDC is enabled/active to disabled/deactivated, or vice versa, the transmitting device may generate and transmit a message with the indication to a receiving device.

New PDCP Control PDU packets, may be defined, according to particular embodiments herein, to provide the feedback from the compressor to the decompressor.

Some of the embodiments contemplated will now be described more fully hereinafter with reference to the accompanying drawings, in which examples are shown. In this section, the embodiments herein will be illustrated in more detail by a number of exemplary embodiments. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art. It should be noted that the exemplary embodiments herein are not mutually exclusive. Components from one embodiment may be tacitly assumed to be present in another embodiment and it will be obvious to a person skilled in the art how those components may be used in the other exemplary embodiments.

Note that although terminology from LTE has been used in this disclosure to exemplify the embodiments herein, this should not be seen as limiting the scope of the embodiments herein to only the aforementioned system. Other wireless systems with similar features, may also benefit from exploiting the ideas covered within this disclosure.

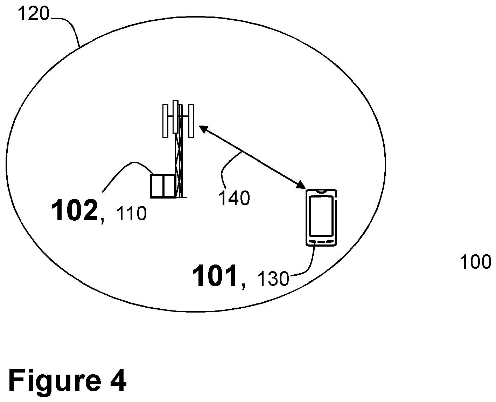

Figure 4 depicts a non-limiting example of a communications network 100, sometimes also referred to as a wireless communications system, cellular radio system, or cellular network, in which embodiments herein may be implemented. The communications network 100 may typically be a Long-Term Evolution (LTE) network, e.g., LTE Frequency Division Duplex (FDD), LTE Time Division Duplex (TDD), LTE Half-Duplex Frequency Division Duplex (HD-FDD), LTE operating in an unlicensed band. The communications network 100 may otherwise, or in addition, support other technologies and be for example a 5G system, 5G network, NR, LTE-NR Dual Connectivity, or Next Gen System or network, Wideband Code Division Multiple Access (WCDMA), Universal Terrestrial Radio Access (UTRA) TDD, Global System for Mobile Communications (GSM) network, GSM/Enhanced Data Rate for GSM Evolution (EDGE) Radio Access Network (GERAN) network, Universal Mobile Telecommunications System (UMTS), Ultra-Mobile Broadband (UMB), EDGE network, network comprising of any combination of Radio Access Technologies (RATs) such as e.g. Multi-Standard Radio (MSR) base stations, multi-RAT base stations etc., and/or other suitable 2G, 3G, 4G, or 5G network, wireless local area network (WLAN) network, Worldwide Interoperability for Microwave Access (WiMax), Bluetooth, Z-Wave and/or ZigBee network, or any cellular network or system. Thus, although terminology from 3GPP LTE has been used in this disclosure to exemplify embodiments herein, this should not be seen as limiting the scope of the embodiments herein to only the aforementioned system. Other wireless systems, especially 5G/NR or LTE-NR Dual Connectivity, WCDMA, WiMax, UMB and GSM, may also benefit from exploiting the ideas covered within this disclosure.

The communications network 100 comprises a plurality of communication devices or nodes, whereof a transmitting device 101, and a receiving device 102 are depicted in the non-limiting example of Figure 4. The transmitting device 101 may be also referred to as a compressor, or compressor device. The receiving device 102 may be also referred to as a decompressor, or decompressor device. The receiving device 102 may typically be a network node, such as a network node 110 described below, e.g., a base station. The transmitting device 101 may typically be a wireless device, such as the wireless device 130 described below.

In other examples which are not depicted in Figure 4, any of the transmitting device 101 and the receiving device 102 may be wireless devices such as the wireless device 130, e.g., D2D devices. In yet other examples which are not depicted either in Figure 4, any of the transmitting device 101 and the receiving device 102 may be network nodes such as the network node 110.

The communications network 100 comprises a plurality of network nodes, whereof a network node 110 is depicted in the non-limiting example of Figure 4. The network node 110 may be a radio network node. That is, a transmission point such as a radio base station, for example an eNB, a New Radio (NR) NodeBs (gNBs), or any other network node with similar features capable of serving a wireless device, such as a user equipment or a machine type communication device, in the communications network 100.

The communications network 100 covers a geographical area which may be divided into cell areas, wherein each cell area may be served by a network node, although, one radio network node may serve one or several cells. The communications network 100 comprises at least a cell 120. In the non-limiting example depicted in Figure 4, the network node 110 serves the serving cell 120. Even in examples wherein the communications network 100 may not be referred to as a cellular system, if the network node 110 serves receiving nodes, such as the wireless device 130, with serving beams, the areas of coverage of the beams may still be referred to as cells. The network node 110 may be of different classes, such as, e.g., macro eNodeB, home eNodeB or pico base station, based on transmission power and thereby also cell size. The network node 110 may support one or several communication technologies, and its name may depend on the technology and terminology used. In LTE, the network node 110, which may be referred to as an eNB, may be directly connected to one or more core networks, which are not depicted in Figure 4 to simplify the Figure. In some examples, the network node 110 may be a distributed node, such as a virtual node in the cloud, and it may perform its functions entirely on the cloud, or partially, in collaboration with a radio network node.

A plurality of wireless devices are located in the wireless communication network 100, whereof a **wireless device 130**, which may also be referred to as a device, is depicted in the non-limiting example of Figure 4. The wireless device 130 comprised in the communications network 100 may be a wireless communication device such as a UE, or a 5G UE, which may also be known as e.g., a mobile terminal, wireless terminal and/or mobile station, a mobile telephone, cellular telephone, or laptop with wireless capability, just to mention some further examples. Any of the wireless devices comprised in the communications network 100 may be, for example, portable, pocket-storable, hand-held, computer-comprised, or a vehicle-mounted mobile device, enabled to communicate voice and/or data, via the RAN, with another entity, such as a server, a laptop, a Personal Digital Assistant (PDA), or a tablet, Machine-to-Machine (M2M) device, device equipped with a wireless interface, such as a printer or a file storage device, modem, or any other radio network unit capable of communicating over a radio link in a communications system. The wireless device 130 comprised in the communications network 100 is enabled to communicate wirelessly in the communications network 100. The communication may be performed e.g., via a RAN, and possibly the one or more core networks, which may comprised within the communications network 100.

The transmitting device 101 may be configured to communicate within the communications network 100 with the receiving device 102 over a **link 140,** e.g., a radio link.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

In general, the usage of "first", "second", "third", "fourth" and/or "fifth" herein may be understood to be an arbitrary way to denote different elements or entities, and may be understood to not confer a cumulative or chronological character to the nouns they modify.

Several embodiments are comprised herein. It should be noted that the examples herein are not mutually exclusive. Components from one embodiment may be tacitly assumed to be present in another embodiment and it will be obvious to a person skilled in the art how those components may be used in the other exemplary embodiments.

More specifically, the following are: a) embodiments related to a transmitting device, such as the transmitting device 101, e.g., a UE; and b) embodiments related to a receiving device, such as the receiving device 102, e.g., an eNB. The transmitting device 101 may also be referred to as a compressor, and the receiving device 102 may also be referred to as a decompressor.

Some embodiments herein will be described with some non-limiting examples. In the following description any reference to a/the UE and/or a/the compressor may be understood to equally apply to the transmitting device 101, and any reference to a/the eNB, and/or a/the network and/or a/the decompressor may be understood to equally apply to the receiving device 102. Any reference to a/the UDC may be understood to be a non-limiting example of an uplink data compression. Any of the examples provided here may be understood to be able to be combined with the embodiments herein, described earlier.

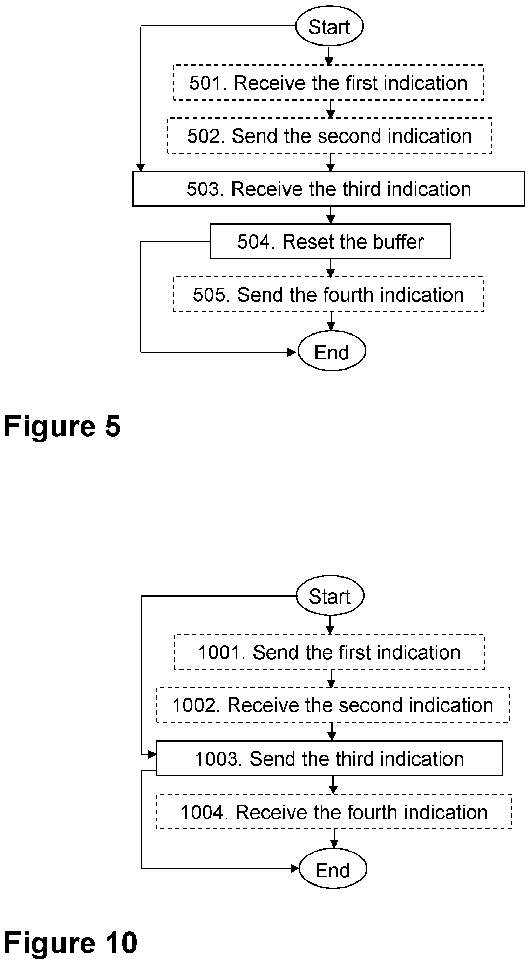

Embodiments of a method, performed by the transmitting device 101, will now be described with reference to the flowchart depicted in **Figure** 5. The method may be considered to be for handling uplink data compression. The transmitting device 101 operates in the communications network 100.

The method, performed by the transmitting device 101 may comprise two or more of the following actions. In some embodiments all the actions may be performed. In some embodiments, two or more actions may be performed. One or more embodiments may be combined, where applicable. All possible combinations are not described to simplify the description. In Figure 5, optional actions are indicated with dashed lines. Some actions may be performed in a different order than that shown in Figure 5.

### Action 501

In order for a device sending information and a device receiving the information to identify a state of their communication, such as e.g., any error encountered, or to identify an enable or disable state, or in order to "activate" and "deactivate" UDC, existing methods assume that this is done via Radio Resource Control (RRC) signalling. RRC signalling may be relatively slow and a UE processing of RRC signalling may take place in a time-window, which may be from 0 to 15 ms after the signalling may have been received. During this time window, an eNB is not certain if the UE has applied the RRC signalling or not and hence, the eNB may be unware of if the packet transmitted is based upon UDC before reset or after reset, whether UDC was enabled/active or disabled/deactivated in the UE during the time window, and the eNB may not even know when the time window occurs in the UE. In case of activating and deactivating UDC via RRC, it may be that the eNB is unaware of the state of the UE.

To address this problem, in this Action 501, the transmitting device 101 may receive a first indication from the receiving device 102. The first indication may indicate an instruction, such as a preference, to the transmitting device 101, to activate or deactivate an uplink data compression feature.

The uplink data compression feature may be e.g., UDC in LTE.

Receiving may be understood as e.g., collecting or obtaining. The receiving 501 may be performed via the link 140.

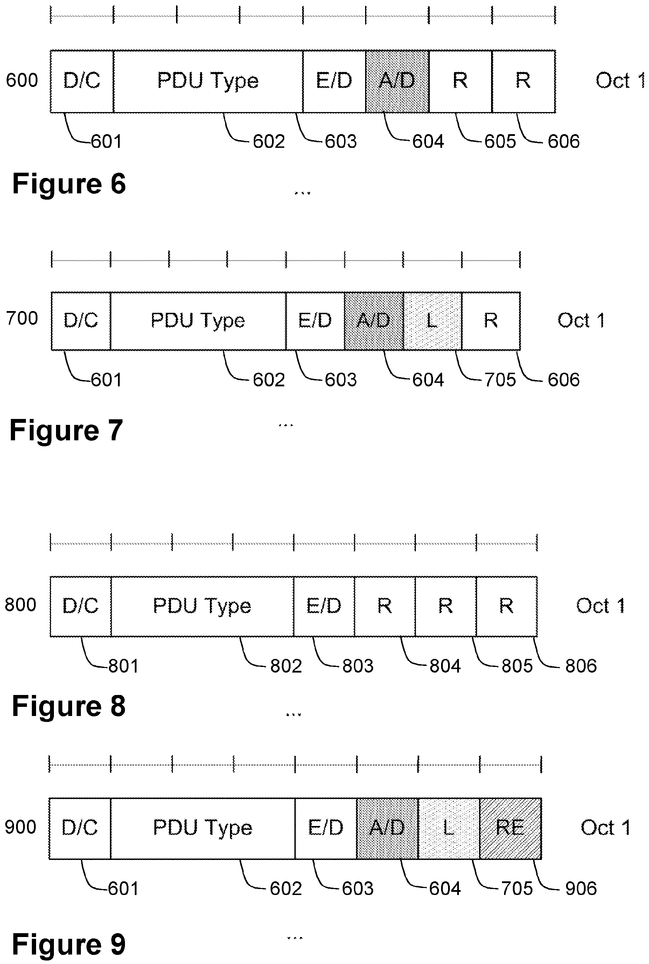

The first indication may be a PDCP message that may be received from the receiving device 102, e.g., an eNB, by the transmitting device 101, e.g., a UE, to indicate whether UDC is to be activated or deactivated by the UE. The transmitting device 101 may, upon reception of the first indication, activate UDC, if the first indication is set to a value, and deactivate UDC, if the first indication is set to another value. An example of how this first indication may be defined may be with an "Activate/Deactivate (A/D) field" of length: 1 bit. The "A/D" field just described is schematically depicted in the control PDU represented in any of Figure 6, Figure 7 and Figure 9.

**Table 1** shows an example of how this first indication may be defined in an "Activate/Deactivate (A/D) field" of length: 1 bit.

**Table 1. A/D field**

| **Bit** | **Description** |
|---|---|
| 0 | Deactivate UDC |
| 1 | Activate UDC |

In one other example according to embodiments herein, the other reserved (R) bits in an octet, such as those depicted in any of Figure 6, Figure 7 and Figure 9, may be utilized among the decompressor, that is, the receiving device 102, and the compressor, that is, the transmitting device 101, for effective communication to handle other error scenarios or to provide feedback.

For instance, in another example of the first indication, one of the reserved bits may be used as a Load ("L") field, as shown in the examples of Figure 7 and Figure 9. As shown in **Table 2,** the receiving device 102 may ask the transmitting device 101 to stop compression temporarily, by setting a pre-defined timer, if, e.g., the receiving device 102 is heavily loaded. For example, when L field may be set to "1", the UDC may be disabled for a certain pre-defined duration. After the expiry of the duration, UDC may be applied again. This may be understood as another example of the first indication.

**Table 2. L field**

| **Bit** | **Description** |
|---|---|
| 0 | Normal Operation |
| 1 | Temporarily Deactivate UDC because of high Load |

An alternative approach may be that the first indication does not have an explicit indication of whether the transmitting device 101 is to activate/enable or deactivate/disable UDC, but rather the reception of the first indication itself may be an implicit indication that the transmitting device 101 is to switch state, for example, disable/deactivate UDC if UDC currently is enabled/active, and enable/activate UDC if UDC currently is disabled/deactivated. This implicit indication may be that the transmitting device 101 may receive a PDU of a certain type, that is, with a certain value of a field "PDU type" as shown in **Table 3**. Table 3 shows an example of how this first indication may be defined in a "PDU Type field" of length: 3 bits. The PDU type-field used may be the already existing PDU field, but set to a new value to indicate that this PDU is a UDC feedback packet, e.g., to the value 011, as shown in Table 3.

**Table 3. PDU type**

| **Bit** | **Description** |
|---|---|
| 000 | PDCP status report |
| 001 | Interspersed ROHC feedback packet |
| 010 | LWA status report |
| 011 | UDC Feedback Packet |
| 100-111 | reserved |

The PDU type field just described is exemplified later in the PDCP Control PDU for UDC feedback packet represented in any of Figure 6, Figure 7, and Figure 9.

According to the foregoing, the first indication may be at least one of: a) a first value in a first field of a first PDU, the first field indicating a type of the PDU, as e.g., shown in Table 3, and b) a second value in a second field of the first PDU, the second field indicating at least one of: a) an Activate/Deactivate (A/D) state, as e.g., shown in Table 1, and b) a Normal Operation/Temporary Deactivation state, as e.g., shown in Table 2.

The first field may be e.g., the "PDU Type" field just described and exemplified in Table 3, which is also depicted later, in any of Figure 6, Figure 7, and Figure 9.

In some particular examples, the first value may be 1 bit. The first value may be 0 or 1.

The second field may be e.g., the "A/D" field just described and exemplified in Table 1, which is also depicted later, in any of Figure 6, Figure 7 and Figure 9. The second field may be, alternatively, or additionally, as depicted in Figure 7 and Figure 9, the "L" field, as e.g., described in Table 2.

By performing this Action 501, the transmitting device 101 may enable the receiving device 102 to exert control of UDC activation by the transmitting device 101, and thereby enable the receiving device 102 to be aware of whether the UDC is enabled/active or disabled/deactivate in the transmitting device 101.

### Action 502

The transmitting device 101 may, upon reception of the first indication, activate or enable UDC, if the first indication is set to a value, and deactivate or disable UDC, if the first indication is set to another value. After making this change, the transmitting device 101 may let the receiving device 102 know what its new state is. Accordingly, in this Action 502, the transmitting device 101 may, send a second indication to the receiving device 102. The first indication described in Action 501 may be understood as another indication. The second indication may be comprised in a control PDU. The second indication may indicate one of: a) the uplink data compression feature is enabled in the transmitting device 101 and a header comprising information about the enabled uplink data compression feature of one or more data PDUs is to be present in the one or more data PDUs to be sent by the transmitting device 101 after sending the second indication, and b) the uplink data compression feature is disabled in the transmitting device 101 and the header comprising information about the enabled uplink data compression of one or more data PDUs is to be absent in the one or more data PDUs to be sent by the transmitting device 101 after sending the second indication.

The sending in this Action 502 may be performed e.g., via the link 140. Sending may also be understood as transmitting.

The sending of the second indication in this Action 502 may be understood as an indication of UDC status to the receiving device 102.

The header may be e.g., the header depicted in Figure 2, in Octate 3 (Oct 3) 203.

### Examples of implementation of the second indication

One way of implementing the second indication may be by using a certain PDU type, e.g., a PDCP control PDU type. The transmitting device 101, e.g., a UE, may then generate such a PDU type and transmit it to the receiving device 102. The receiving device 102, e.g., an eNB, may, upon reception of this PDU type, know that the transmitting device 101 has switched from a state. For example, if the transmitting device 101 first was in a state where UDC was enabled/active, but UDC becomes disabled/deactivated, the transmitting device 101 may generate and send the new PDU type to the receiving device 102, and the receiving device 102 may then know that any packet received after this PDU type has not been processed by the UDC algorithm in the transmitting device 101. Or if the transmitting device 101 first was in a state where UDC was disabled/deactivated, but UDC becomes enabled/activated, the transmitting device 101 may generate and send the new PDU type to the receiving device 102, and the receiving device 102 may then know that any packet received after this PDU type has been processed by the UDC algorithm in the transmitting device 101.

Accordingly, in some embodiments, the second indication may indicate a third value in a third field of the control PDU, the third field indicating the type of PDU. The third field may be e.g., the "PDU Type" field depicted in Figure 8. The third value may be 3 bit. The third value may be 011.

It may be noted, that in some situations, packets received by the receiving device 102 may not be in the same order as the transmitting device 101 may have generated them. To solve this, the transmitting device 101 may, according to some embodiments, indicate a sequence number to the receiving device 102. The sequence number may indicate which is the last packet before the switch happened, or it may indicate the first packet after the switch.

According to the foregoing, in some embodiments, the second indication may further indicate one of: a) a sequence number of a last packet sent by the transmitting device 101 before an enabled or disabled state of the transmitting device 101 switched; and b) a sequence number of a first packet sent by the transmitting device 101 after the enabled or disabled state of the transmitting device 101 switched.

The PDU comprising flag bits, which may serve as the second indication in some embodiments, may further have an explicit indication indicating whether UDC is enabled or disabled by the transmitting device 101. An example of such other second indication may be defined in an Enabled/Disabled (E/D) field. An example implementation of this is shown in Figure 8, where a new PDCP Control PDU for UDC is used, and an E/D indication is set to a first value, e.g., 1 or 0, if UDC is enabled in the transmitting device 101, or to a second value, e.g. 0, or 1, if UDC is disabled. In the particular example depicted in **Table** 4, 0 indicates that UDC is enabled, and 1 indicates that UDC is disabled.

**Table 4. E/D field**

| **Bit** | **Description** |
|---|---|
| 0 | UDC enabled |
| 1 | UDC disabled |

One benefit of having an explicit indication of the enabled/disabled state in the transmitting device 101 is that the receiving device 102 may be enabled to not need to consider which state the transmitting device 101 was in prior to receiving the second indication, in order to understand what the second indication means. E.g., if the transmitting device 101 does not include such an explicit indication, the receiving device 102 would have to know whether UDC is enabled or disabled in the transmitting device 101 to be able to understand if the second indication means that the transmitting device 101 has disabled or enabled UDC, while if an explicit indication is provided to the receiving device 102 by the transmitting device 101, the receiving device 102 may know this by determining the value of the second indication.

Figure 8 depicts a schematic visual representation of a new PDU type where the new E/D indication, that is, the E/D field, is included. However, as stated above, in some embodiments, the E/D indication may not be present but rather the second indication may be only a PDU of type which implicitly indicates that the switch has taken place or will take place, e.g., after 10 packets or a packet with sequence number X, UDC will be enabled/disabled.

A particular example of how the transmitting device 101 may set the values in the PDU type is shown next.

First, the already existing Data/Control (D/C)-indication, the D/C field, may be set to 0 to indicate that this is a Control PDU, as shown in **Table 5.** The D/C field may have a length of 1 bit.

**Table 5. D/C field**

| **Bit** | **Description** |
|---|---|
| 0 | Control PDU |
| 1 | Data PDU |

Further, the already existing PDU type-field may be included, but set to a new value to indicate that this PDU is a UDC feedback packet, e.g., to the value 011, as shown in Table 3.

And in case an explicit indication of whether UDC is enabled/disabled, e.g. by means of the E/D-field, then the second indication may be defined as shown in Table 4.

According to the foregoing, the second indication may be one of: a) the third value in a third field of the control PDU, the third field indicating a type of PDU, and b) a fourth value in a fourth field of the control PDU, the fourth field indicating an Enabled/Disabled (E/D) state.

The fourth field may be e.g., the "E/D" field depicted in Figure 8.

The fourth value, e.g., any of the values in Table 4, may be 1 bit. The fourth value may be 0 or 1.

By the transmitting device 101 sending the second indication to the receiving device 102, indicating whether the uplink data compression features is enabled or disabled and whether the header is going to be present or absent in the one or more data PDUs to be sent by the transmitting device 101 after sending the indication, the transmitting device 101 may enable the receiving device 102 to know how to read the one or more data PDUs, and to know if the one or more data PDUs are compressed or not. Therefore, the receiving device 102 may process the one or more data PDUs accordingly. Consequently, processing and energy resources in the communications network 100 may be used more efficiently.

### Action 503

Sending the control PDU of Action 502 may not only enable the receiving device 102 to be aware of the state of the transmitting device 101, but also to detect if the compression buffer of the transmitting device 101 and decompression buffer of the receiving device 102 may be out of synchronization, e.g., by detecting a checksum error. If such an error is detected, the receiving device 102 may then notify the transmitting device 101 about the error and attempt to handle it by requesting that the transmitting device 101 perform a buffer reset. Accordingly, in this Action 503, the transmitting device 101 receives a third indication from the receiving device 102 operating in the communications network 100. The third indication instructs the transmitting device 101 to perform a buffer reset. The third indication is a fifth value in a fifth field in a second PDU received from the receiving device 102. The third indication received in this Action 503 may be simply referred to herein as "the indication". The fifth field in this Action 503 may be simply referred to herein as "the field", and the second PDU may be referred to herein as "the PDU". The PDU may be a PDCP control PDU.

The receiving in this Action 503 may be performed via the link 140.

The second PDU may be understood to be a PDU received at a later time point than the first PDU described in Action 501.

The fifth field may be e.g., the Reset ("RE") field depicted in Figure 9.

The fifth value may be 1 bit. The fifth value may be 0 or 1.

A particularly effective means to convey that the transmitting buffer 101 is to reset the buffer may be by the use of PDCP control PDU packet as shown in Figure 9. According to embodiments herein, one of the bits as part of the newly defined PDCP control PDU packet may be used by the receiving device 102 to inform the transmitting device 101 that a reset of buffer is needed, as shown in **Table** 6. The fifth field may be e.g., the "RE" field depicted in Figure 9. The fifth value may be 1 bit. The fifth value may be 0 or 1.

**Table 6. RE field**

| **Bit** | **Description** |
|---|---|
| 0 | Normal operation/unused |
| 1 | Perform Buffer Reset |

By receiving the third indication in this Action 503, the transmitting device 101 may be enabled to initiate correcting any lack of synchronization between the compression buffer and the decompression buffer, on the side of the transmitting device 101, and resynchronize the compression buffer, which may be understood to enable to solve the buffer mismatch issue and allow UDC to be applied again .

### Action 504

In this Action 504, the transmitting device 101 resets the buffer, based on the received indication, that is, the received third indication.

By resetting the buffer in this Action 504, the transmitting device 101 may resynchronize the compression buffer, which may be understood to enable UDC to be initiated again.

### Action 505

In this Action 505, the transmitting device 101 may send a fourth indication to the receiving device 102. The fourth indication may indicate that a buffer reset has been performed.

The sending 505 may be performed via the link 140.

Similarly to how it was described in Action 503, a bit from the transmitting device 101 to the receiving device 102 may subsequently be used to convey that the reset has been performed, as shown in Table 7.

**Table 7. RE field**

| **Bit** | **Description** |
|---|---|
| 0 | Normal operation/unused |
| 1 | Buffer Resest is done |

By sending the fourth indication in this Action 504, the transmitting device 101 may enable the receiving device 102 to acknowledge that a reset is done and the UDC buffer memory has been initialized to 0 or pre-filled by a known value.

**Figure** 6 is a schematic diagram illustrating an example of a packet format, according to embodiments herein. The packet format represented is for a non-limiting example of one octet (Oct 1) 600 that may be comprised in the first PDU that may be received by the transmitting device 101 in Action 501. In the depicted example, the first PDU comprises a D/C field 601, and the first field 602 as the PDU Type field, which may indicate the type of the PDU, as e.g., shown in Table 3. The first octet 600 of the first PDU also comprises the E/D field 603, and the second field 604 of the first PDU as an A/D field, as e.g., shown in Table 1. Lastly, two reserved fields, a first reserved (R) field 605 and a second R field 606 are also comprised. Above the Octet, Figure 6 depicts the bits consumed by each field in the octet. The suspensive points in the Figure indicate certain information useful to covey the UDC information.

**Figure 7** is a schematic diagram illustrating an example of a packet format, according to embodiments herein. The packet format represented is for a non-limiting example of a first octet (Oct 1) 700 that may be comprised in the first PDU that may be received by the transmitting device 101 in Action 501. In the depicted example, the first PDU comprises the same fields described in Figure 6, with the exception that there is a further second field 705, which is an "L" field 705 replacing the first R field and indicating the Normal Operation/Temporary Deactivation state, as e.g., shown in Table 2.

**Figure 8** is a schematic diagram illustrating an example of a packet format, according to embodiments herein. The packet format represented is for a non-limiting example of a first octet (Oct 1) 800 that may be comprised in the control PDU that may be sent by the transmitting device 101 in Action 502. In the depicted example, the control PDU comprises the D/C field 801, and the second indication in the third field 802 as the PDU Type field, which may indicate the type of the PDU, as e.g., shown in Table 3. The first octet 600 of the control PDU also comprises a further second indication in the fourth field 803 of the control PDU as the E/D field, as e.g., shown in Table 4. Lastly, three reserved fields, a first reserved (R) field 804, a second R filed 805 and a third R field 806 are also comprised.

**Figure 9** is a schematic diagram illustrating an example of a packet format, according to embodiments herein. The packet format represented is for a non-limiting example of a first octet (Oct 1) 900 that may be comprised in the second PDU that is received by the transmitting device 101 in Action 503. In the depicted example, the second PDU comprises the D/C field 601, the first field as the PDU Type field 602, the E/D field 603, and the second field of the first PDU as the A/D field 604, the further second field, as the "L" field 705, and the fifth field as the RE field 906.

Embodiments of a method, performed by the receiving device 102, will now be described with reference to the flowchart depicted in **Figure 10**. The method may be considered to be handling uplink data compression. The receiving device 102 operates in the communications network 100.

The method, performed by the receiving device 102 may comprise one or more of the following actions. In some embodiments all the actions may be performed. In some embodiments, one or more actions may be performed. One or more embodiments may be combined, where applicable. All possible combinations are not described to simplify the description. In Figure 10, optional actions are indicated with dashed lines. Some actions may be performed in a different order than that shown in Figure 10.

The detailed description of some of the following corresponds to the same references provided above, in relation to the actions described for the transmitting device 101, and will thus not be repeated here to simplify the description, however, it may be understood to equally apply. For example, the uplink data compression feature may be e.g., UDC in LTE.

### Action 1001

In this Action 1001, the receiving device 102 may send the first indication to the transmitting device 101. The first indication may indicate the preference to the transmitting device 101 to activate or deactivate the uplink data compression feature.

The sending in this Action 1001 may be performed via the link 140.

As explained earlier, the first indication may be at least one of: a) the first value in the first field 602 of the first PDU, the first field 602 indicating a type of the PDU, and b) the second value in the second field 604 of the first PDU. The second field 604, 705 indicating at least one of: a) the Activate/Deactivate (A/D) state, and b) the Normal Operation/Temporary Deactivation state.

As an example of the second field, the first indication may be a PDCP message that may be sent from the receiving device 102, e.g., an eNB, to the transmitting device 101, e.g., a UE, to indicate whether UDC is to be activated or deactivated by the transmitting device 101. Table 1 shows an example of how this first indication may be defined. The second field 604 may be e.g., the "A/D" field depicted in any of Figure 6, Figure 7 and Figure 9.

An alternative approach may be that the first indication does not have an explicit indication of whether the transmitting device 101 is to activate/enable or deactivate/disable UDC, but rather the reception of the first indication itself may be an implicit indication that the transmitting device 101 is to switch state, for example, disable/deactivate UDC if UDC currently is enabled/active, and enable/activate UDC if UDC currently is disabled/deactivated. This implicit indication may be that the receiving device 102 may send a PDU of a certain type, that is, with a certain value of the field "PDU type" as shown in Table 3, which may be considered an example of the first field 602. The first field 602 may be e.g., the "PDU Type" field depicted in any of Figure 6, Figure 7 and Figure 9. The first value may be 1 bit. The first value may be 0 or 1.

In some embodiments, the first indication may indicate the instruction to the transmitting device 101 to activate or deactivate the uplink data compression feature.

By sending the first indication to the transmitting device 101 in this Action 1001, the receiving device 102 may exert network control on the UDC activation in the transmitting device 101.

### Action 1002

In this Action 1002, the receiving device 102 may receive the second indication, from the transmitting device 101. The second indication may be comprised in the control PDU. The second indication may indicate one of: a) the data compression feature is enabled in the transmitting device 101 and the header comprising the information about the enabled uplink data compression feature of one or more data PDUs is to be present in the one or more data PDUs to be received from the transmitting device 101 after receiving the indication, and b) the uplink data compression feature is disabled in the transmitting device 101 and the header comprising the information about the enabled uplink data compression feature of one or more data PDUs is to be absent in the one or more data PDUs to be received from the transmitting device 101 after receiving the indication.

The receiving 1002 may be performed e.g., via the link 140.

As mentioned earlier, the header may be e.g., the header depicted in Figure 2, in Octate 3 (Oct 3).

In some embodiments, as described earlier, the second indication may be one of: a) the third value in the third field 802 of the control PDU, the third field 802 indicating the type of PDU, and b) the fourth value in the fourth field 803 of the control PDU, the fourth field 803 indicating the Enabled/Disabled (E/D) state.

The third field 802 may be e.g., the "PDU Type" field depicted in Figure 8. The third value may be 3 bit. The third value may be 011.

The fourth field 803 may be e.g., the "E/D" field depicted in Figure 8. The fourth value may be 1 bit. The fourth value may be 0 or 1.

As discussed earlier, in some situations, packets received by the receiving device 102 may not be in the same order as the transmitting device 101 may have generated them. To solve this, the transmitting device 101 may, according to some embodiments, indicate a sequence number to the receiving device 102. The sequence number may indicate which is the last packet before the switch happened, or it may indicate the first packet after the switch. Accordingly, in some embodiments, the second indication may further indicate one of: a) the sequence number of the last packet sent by the transmitting device 101 before the enabled or disabled state of the transmitting device 101 switched; and b) the sequence number of the first packet sent by the transmitting device 101 after the enabled or disabled state of the transmitting device 101 switched.

The receiving device 102 may then need to buffer packets received by the transmitting device 101 to mitigate or avoid that a certain packet received by the receiving device 102 is interpreted as it was generated and/or transmitted by the transmitting device 101 before the switch, while it actually was generated and/or transmitted after the switch. To do such buffering may generate additional delay since the packets may not be processed by the receiving device 102 directly upon reception from the transmitting device 101, and hence the receiving device 102 may perform such buffering only at a time close to a switch.

### Action 1003

In existing methods, it has been described to use RRC signalling to reset the buffer when failure such as checksum failures may be detected. However, an effective means to convey this may be by the receiving device 102 perform Action 103 according to embodiments herein. In this Action 1003, the receiving device 102 sends the third indication to the transmitting device 101 operating in the communications network 100. The third indication instructs the transmitting device 101 to perform the buffer reset. The third indication is the fifth value in the fifth field 906 in the second PDU that is sent to the transmitting device 101.

As stated earlier, the third indication sent in this Action 1003 may be simply referred to herein as "the indication". The fifth field in this Action 1003 may be simply referred to herein as "the field", and the second PDU may be referred to herein as "the PDU". The PDU may be a PDCP control PDU. The sending in this Action 1003 may be performed via the link 140.

A particularly effective means to convey that the transmitting buffer 101 is to reset the buffer may be by the use of PDCP control PDU packet as shown in Figure 9. According to embodiments herein, one of the bits as part of the newly defined PDCP control PDU packet may be used by the receiving device 102 to inform the transmitting device 101 that a reset of buffer is needed, as shown in Table 6. The fifth field 906 may be e.g., the "RE" field depicted in Figure 9. The fifth value may be 1 bit. The fifth value may be 0 or 1.

By sending the third indication to the transmitting device 101 in this Action 1003, the receiving device 102 may convey a buffer reset from the network to the transmitting device 101 and thereby indicate that the receiving device 102 has discovered an error during the packet decompression. This may be understood to indicate that most likely the receiving device 102 and the transmitting device 101 have mismatch in the UDC buffer memory content.

### Action 1004

In this Action 1004, the receiving device 102 may receive the fourth indication from the transmitting device 101. The fourth indication may indicate that a buffer reset has been performed.

The receiving in this Action 1004 may be performed via the link 140.

As stated earlier, the bit from the receiving device 102 to the transmitting device 101 may be used to convey that reset has been performed, as shown in Table 7.

Certain embodiments may provide one or more of the following technical advantage(s). The advantages of the embodiments herein are mainly in terms of efficiency and flexibility, which may be summarized as follows: a receiving device such as an eNB may be enabled to know if the transmitting device, e.g., a UE, has successfully released the uplink data compression feature configuration, e.g., the UDC configuration. By the transmitting device sending the second indication to the receiving device, indicating whether the uplink data compression features is enabled or disabled and whether the header is going to be present or absent in the one or more data PDUs to be sent by the transmitting device after sending the indication, the transmitting device enables the receiving device to know how to read the one or more data PDUs, and to know if the one or more data PDUs are compressed or not. Therefore, the receiving device may process the one or more data PDUs accordingly. Consequently, processing and energy resources in the communications network may be used more efficiently.

In addition, by the transmitting device 101 receiving the third indication, the transmitting device 101 is enabled to later reset the buffer and correct any lack of synchronization between the compression buffer and the decompression buffer, on the side of the transmitting device 101. Consequently, the transmitting device 101 and receiving device 102 may use the UDC again.

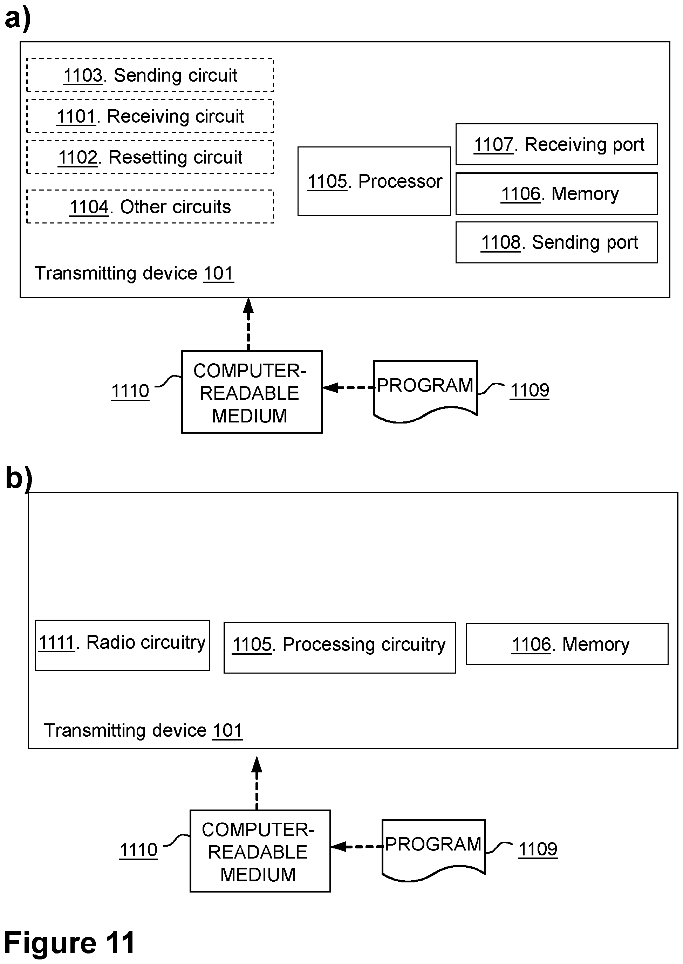

**Figure 11** depicts two different examples in panels a) and b), respectively, of the arrangement that the transmitting device 101 may comprise to perform the method actions described above in relation to Figure 5. In some embodiments, the transmitting device 101 may comprise the following arrangement depicted in **Figure 11a****.** The transmitting device 101 may be configured to handle uplink data compression. The transmitting device 101 is configured to operate in the communications network 100.

Several embodiments are comprised herein. Components from one embodiment may be tacitly assumed to be present in another embodiment and it will be obvious to a person skilled in the art how those components may be used in the other exemplary embodiments. The detailed description of some of the following corresponds to the same references provided above, in relation to the actions described for the transmitting device 101, and will thus not be repeated here. For example, the uplink data compression feature may be e.g., UDC in LTE.

In Figure 11, optional circuits are indicated with dashed boxes.

The transmitting device 101 is configured to perform the receiving of Action 503, e.g. by means of a **receiving circuit 1101** within the transmitting device 101, configured to, receive the indication, from the receiving device 102 configured to operate in the communications network 100. The indication is configured to instruct the transmitting device 101 to perform the buffer reset. The indication is configured to be the value in the field 906 in the PDU configured to be received from the receiving device 102. The receiving circuit 1102 may be the processor 1105 of the transmitting device 101, or an application running on such processor.

In the preceding paragraph, the indication may be understood to be the third indication, the field may be understood to be the fifth field, and the PDU may be understood to be the second PDU. The PDU may be a PDCP control PDU.

The transmitting device 101 is further configured to perform the resetting of Action 503, e.g. by means of a **resetting circuit 1102** within the transmitting device 101, configured to, reset the buffer, based on the indication, that is, the third indication, configured to be received. The resetting circuit 1102 may be the processor 1105 of the transmitting device 101, or an application running on such processor.

In some embodiments, the indication may be configured to be the third indication. In some of such embodiments, the transmitting device 101 may be further configured to perform the receiving of Action 501, e.g. by means of the receiving circuit 1101 within the transmitting device 101, configured to receive the first indication from the receiving device 102. The first indication may be configured to indicate the preference to the transmitting device 101 to activate or deactivate the uplink data compression feature.

In some embodiments wherein the PDU may be configured to be the second PDU, the first indication may be configured to be at least one of: a) the first value in the first field 602 of the first PDU. The first field 602 may be configured to indicate the type of the PDU; and b) the second value in the second field 604, 705 of the first PDU. The second field 604, 705 may be configured to indicate at least one of: a) the A/D state, and b) the Normal Operation/Temporary Deactivation state.

In some embodiments, the indication may be configured to be the third indication. In some of such embodiments, the transmitting device 101 may be further configured to perform the sending of Action 502, e.g. by means of a **sending circuit 1103** within the transmitting device 101, configured to, send the second indication to the receiving device 102. The second indication is configured to be comprised in a control PDU. The second indication is configured to indicate one of: a) the uplink data compression feature is enabled in the transmitting device 101 and the header comprising information about the enabled uplink data compression feature of one or more data PDUs is to be present in the one or more data PDUs configured to be sent by the transmitting device 101 after sending the second indication; and b) the uplink data compression feature is disabled in the transmitting device 101 and the header comprising information about the enabled uplink data compression feature of one or more data PDUs is to be absent in the one or more data PDUs configured to be to be sent by the transmitting device 101 after sending the second indication. The sending circuit 1103 may be a processor 1105 of the transmitting device 101, or an application running on such processor.

In some embodiments, the second indication may be configured to be one of: a) the third value in the third field 802 of the control PDU, the third field 802 being configured to indicate the type of PDU, and b) the fourth value in the fourth field 803 of the control PDU. The fourth field 803 may configured to indicate the Enabled/Disabled (E/D) state.

In some embodiments, the second indication may be further configured to indicate one of: a) the sequence number of the last packet configured to be sent by the transmitting device 101 before the enabled or disabled state of the transmitting device 101 is configured to be switched; and b) the sequence number of the first packet configured to be sent by the transmitting device 101 after the enabled or disabled state of the transmitting device 101 is configured to be switched.

In some embodiments, the indication may be configured to be the third indication. In some of such embodiments, the transmitting device 101 may be further configured to perform the sending 505 action, e.g. by means of the sending circuit 1103 within the transmitting device 101, configured to send the fourth indication to the receiving device 102. The fourth indication may be configured to indicate that the buffer reset has been performed.

Other circuits 1104 may be comprised in the transmitting device 101.

The embodiments herein in the transmitting device 101 may be implemented through one or more processors, such as a processor 1105 in the transmitting device 101 depicted in Figure 11a, together with computer program code for performing the functions and actions of the embodiments herein. A processor, as used herein, may be understood to be a hardware component. The program code mentioned above may also be provided as a computer program product, for instance in the form of a data carrier carrying computer program code for performing the embodiments herein when being loaded into the transmitting device 101. One such carrier may be in the form of a CD ROM disc. It is however feasible with other data carriers such as a memory stick. The computer program code may furthermore be provided as pure program code on a server and downloaded to the transmitting device 101.

The transmitting device 101 may further comprise a memory 1106 comprising one or more memory units. The memory 1106 is arranged to be used to store obtained information, store data, configurations, schedulings, and applications etc. to perform the methods herein when being executed in the transmitting device 101.

In some embodiments, the transmitting device 101 may receive information from, e.g., the receiving device 102, through a receiving port 1107. In some embodiments, the receiving port 1107 may be, for example, connected to one or more antennas in transmitting device 101. In other embodiments, the transmitting device 101 may receive information from another structure in the communications network 100 through the receiving port 1107. Since the receiving port 1107 may be in communication with the processor 1105, the receiving port 1107 may then send the received information to the processor 1105. The receiving port 1107 may also be configured to receive other information.

The processor 1105 in the transmitting device 101 may be further configured to transmit or send information to e.g., the receiving device 102, another structure in the communications network 100, through a **sending port 1108**, which may be in communication with the processor 1105, and the memory 1106.

Those skilled in the art will also appreciate that the receiving circuit 1101, the resetting circuit 1102, the sending circuit 1103, and the other circuits 1104 described above may refer to a combination of analog and digital circuits, and/or one or more processors configured with software and/or firmware, e.g., stored in memory, that, when executed by the one or more processors such as the processor 1105, perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

Also, in some embodiments, the different modules or circuits 1101-1104 described above may be implemented as one or more applications running on one or more processors such as the processor 1105.

Thus, the methods according to the embodiments described herein for the transmitting device 101 may be respectively implemented by means of a **computer program 1109** product, comprising instructions, i.e., software code portions, which, when executed on at least one processor 1105, cause the at least one processor 1105 to carry out the actions described herein, as performed by the transmitting device 101. The computer program 1109 product may be stored on a **computer-readable storage medium 1110.** The computer-readable storage medium 1110, having stored thereon the computer program 1109, may comprise instructions which, when executed on at least one processor 1105, cause the at least one processor 1105 to carry out the actions described herein, as performed by the transmitting device 101. In some embodiments, the computer-readable storage medium 1110 may be a non-transitory computer-readable storage medium, such as a CD ROM disc, or a memory stick. In other embodiments, the computer program 1109 product may be stored on a carrier containing the computer program 1109 just described, wherein the carrier is one of an electronic signal, optical signal, radio signal, or the computer-readable storage medium 1110, as described above.

The transmitting device 101 may comprise a communication interface configured to facilitate communications between the transmitting device 101 and other nodes or devices, e.g., the receiving device 102. The interface may, for example, include a transceiver configured to transmit and receive radio signals over an air interface in accordance with a suitable standard.

In other embodiments, the transmitting device 101 may comprise the following arrangement depicted in **Figure 11b****.** The transmitting device 101 may comprise a **processing circuitry 1105,** e.g., one or more processors such as the processor 1105, in the transmitting device 101 and the memory 1106. The transmitting device 101 may also comprise a **radio circuitry 1111,** which may comprise e.g., the receiving port 1107 and the sending port 1108. The processing circuitry 1105 may be configured to, or operable to, perform the method actions according to Figure 5, and/or Figures 16-20, in a similar manner as that described in relation to Figure 11a. The radio circuitry 1111 may be configured to set up and maintain at least a wireless connection with the receiving device 102. Circuitry may be understood herein as a hardware component.

Hence, embodiments herein also relate to the transmitting device 101 operative to operate in the communications network 100. The transmitting device 101 may comprise the processing circuitry 1105 and the memory 1106, said memory 1106 containing instructions executable by said processing circuitry 1105, whereby the transmitting device 101 is further operative to perform the actions described herein in relation to the transmitting device 101, e.g., in Figure 5, and/or Figures 16-20.

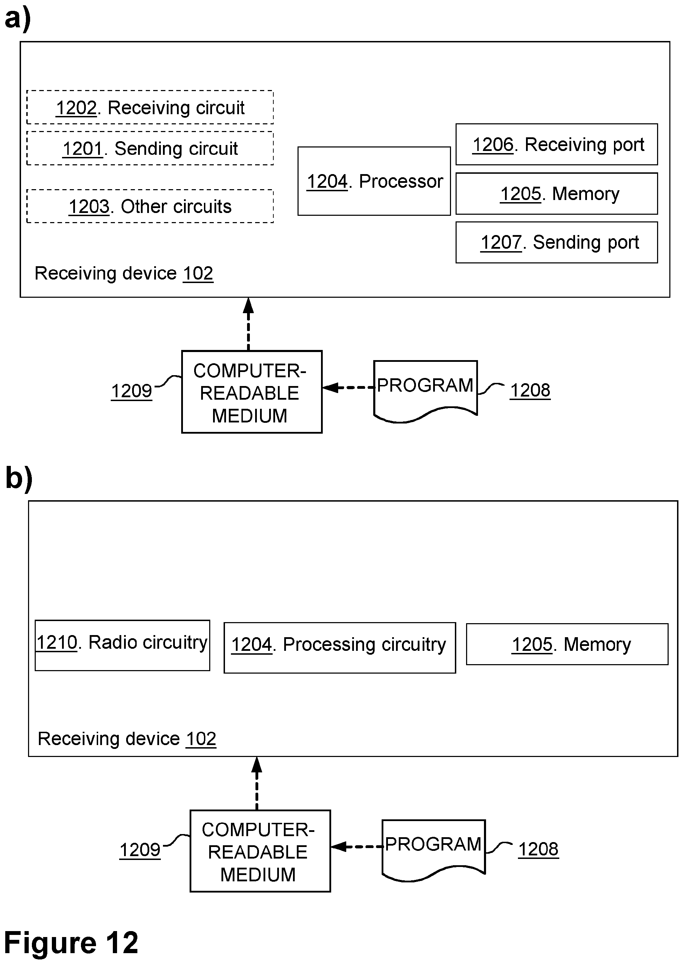

**Figure 12** depicts two different examples in panels a) and b), respectively, of the arrangement that the receiving device 102 may comprise to perform the method actions described above in relation to Figure 10. In some embodiments, the receiving device 102 may comprise the following arrangement depicted in **Figure 12a**. The receiving device 102 may be configured to handle uplink data compression. The receiving device 102 is configured to operate in the communications network 100.

Several embodiments are comprised herein. Components from one embodiment may be tacitly assumed to be present in another embodiment and it will be obvious to a person skilled in the art how those components may be used in the other exemplary embodiments. The detailed description of some of the following corresponds to the same references provided above, in relation to the actions described for the receiving device 102, and will thus not be repeated here. For example, the uplink data compression feature may be e.g., UDC in LTE.

In Figure 12, optional circuits are indicated with dashed boxes.

The receiving device 102 is further configured to perform the sending of Action 1003, e.g. by means of a **sending circuit 1201** within the receiving device 102, configured to, send the indication to the transmitting device 101 configured to operate in the communications network 100. The indication is configured to instruct the transmitting device 101 to perform the buffer reset. The indication is configured to be the value in the field 906 in the PDU configured to be sent to the transmitting device 101. The sending circuit 1201 may be the processor 1204 of the receiving device 102, or an application running on such processor.

In the preceding paragraph, the indication may be understood to be the third indication, the field may be understood to be the fifth field, and the PDU may be understood to be the second PDU. The PDU may be a PDCP control PDU.

In some of such embodiments, the indication may be configured to be the third indication. In some of such embodiments, the receiving device 102 may be further configured to perform the sending of Action 1001, e.g. by means of the sending circuit 1201 within the receiving device 102, configured to send the first indication to the transmitting device 101. The first indication may be configured to indicate the preference to the transmitting device 101 to activate or deactivate the uplink data compression feature.

In some embodiments, PDU may be configured to be the second PDU. In some of such embodiments, the first indication may be configured to be at least one of: a) the first value in the first field 602 of the first PDU. The first field 602 may be configured to indicate the type of the PDU; and b) the second value in the second field 604, 705 of the first PDU. The second field 604, 705 may be configured to indicate at least one of: a) the A/D state, and b) the Normal Operation/Temporary Deactivation state.

In some embodiments, the indication may be configured to be the third indication. In some of such embodiments, the receiving device 102 may be configured to perform the receiving of Action 1002, e.g. by means of the **receiving circuit 1201** within the receiving device 102, configured to, receive the second indication from the transmitting device 101 configured to operate in the communications network 100. The second indication is configured to be comprised in a control PDU. The second indication is configured to indicate one of: a) the uplink data compression feature is enabled in the transmitting device 101 and the header comprising information about the enabled uplink data compression feature of one or more data PDUs is to be present in the one or more data PDUs configured to be received from the transmitting device 101 after receiving the second indication, and b) the uplink data compression feature is disabled in the transmitting device 101 and the header comprising information about the enabled uplink data compression feature of one or more data PDUs is to be absent in the one or more data PDUs configured to be received from the transmitting device 101 after receiving the second indication. The receiving circuit 1201 may be a processor 1204 of the receiving device 102, or an application running on such processor.

In some embodiments, the second indication may be configured to be one of: a) the third value in the third field 802 of the control PDU, the third field 802 being configured to indicate the type of PDU, and b) the fourth value in the fourth field 803 of the control PDU. The fourth field 803 may be configured to indicate the Enabled/Disabled (E/D) state.

In some embodiments, the second indication may be further configured to indicate one of: a) the sequence number of the last packet configured to be sent by the transmitting device 101 before the enabled or disabled state of the transmitting device 101 is configured to be switched; and b) the sequence number of the first packet configured to be sent by the transmitting device 101 after the enabled or disabled state of the transmitting device 101 is configured to be switched.

In some embodiments, the indication may be configured to be the third indication. In some of such embodiments, the receiving device 102 may be further configured to perform the receiving of Action 1004, e.g. by means of a **receiving circuit 1202** within the receiving device 102, configured to, receive the fourth indication from the transmitting device 101. The fourth indication may be configured to indicate that the buffer reset has been performed. The receiving circuit 1202 may be the processor 1204 of the receiving device 102, or an application running on such processor.

**Other circuits 1203** may be comprised in the receiving device 102.

The embodiments herein in the receiving device 102 may be implemented through one or more processors, such as a **processor 1204** in the receiving device 102 depicted in Figure 12a, together with computer program code for performing the functions and actions of the embodiments herein. A processor, as used herein, may be understood to be a hardware component. The program code mentioned above may also be provided as a computer program product, for instance in the form of a data carrier carrying computer program code for performing the embodiments herein when being loaded into the receiving device 102. One such carrier may be in the form of a CD ROM disc. It is however feasible with other data carriers such as a memory stick. The computer program code may furthermore be provided as pure program code on a server and downloaded to the receiving device 102.

The receiving device 102 may further comprise a memory 1205 comprising one or more memory units. The memory 1205 is arranged to be used to store obtained information, store data, configurations, schedulings, and applications etc. to perform the methods herein when being executed in the receiving device 102.

In some embodiments, the receiving device 102 may receive information from, e.g., the transmitting device 101, through a **receiving port 1206**. In some embodiments, the receiving port 1206 may be, for example, connected to one or more antennas in receiving device 102. In other embodiments, the receiving device 102 may receive information from another structure in the communications network 100 through the receiving port 1206. Since the receiving port 1206 may be in communication with the processor 1204, the receiving port 1206 may then send the received information to the processor 1204. The receiving port 1206 may also be configured to receive other information.

The processor 1204 in the receiving device 102 may be further configured to transmit or send information to e.g., the transmitting device 101, or another structure in the communications network 100, through a **sending port 1207**, which may be in communication with the processor 1204, and the memory 1205.

Those skilled in the art will also appreciate that the sending circuit 1201, the receiving circuit 1202, and the other circuits 1203 described above may refer to a combination of analog and digital circuits, and/or one or more processors configured with software and/or firmware, e.g., stored in memory, that, when executed by the one or more processors such as the processor 1204, perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

Also, in some embodiments, the different circuits 1201-1203 described above may be implemented as one or more applications running on one or more processors such as the processor 1204.

Thus, the methods according to the embodiments described herein for the receiving device 102 may be respectively implemented by means of a **computer program 1208** product, comprising instructions, i.e., software code portions, which, when executed on at least one processor 1204, cause the at least one processor 1204 to carry out the actions described herein, as performed by the receiving device 102. The computer program 1208 product may be stored on a **computer-readable storage medium 1209.** The computer-readable storage medium 1209, having stored thereon the computer program 1208, may comprise instructions which, when executed on at least one processor 1204, cause the at least one processor 1204 to carry out the actions described herein, as performed by the receiving device 102. In some embodiments, the computer-readable storage medium 1209 may be a non-transitory computer-readable storage medium, such as a CD ROM disc, or a memory stick. In other embodiments, the computer program 1208 product may be stored on a carrier containing the computer program 1208 just described, wherein the carrier is one of an electronic signal, optical signal, radio signal, or the computer-readable storage medium 1209, as described above.

The receiving device 102 may comprise a communication interface configured to facilitate communications between the receiving device 102 and other nodes or devices, e.g., the transmitting device 101. The interface may, for example, include a transceiver configured to transmit and receive radio signals over an air interface in accordance with a suitable standard.

In other embodiments, the receiving device 102 may comprise the following arrangement depicted in **Figure 12b****.** The receiving device 102 may comprise a **processing circuitry 1204,** e.g., one or more processors such as the processor 1204, in the receiving device 102 and the memory 1205. The receiving device 102 may also comprise a **radio circuitry 1210,** which may comprise e.g., the receiving port 1206 and the sending port 1207. The processing circuitry 1210 may be configured to, or operable to, perform the method actions according to Figure 10, and/or Figure 16-20, in a similar manner as that described in relation to Figure 12a. The radio circuitry 1210 may be configured to set up and maintain at least a wireless connection with the transmitting device 101. Circuitry may be understood herein as a hardware component.

Hence, embodiments herein also relate to the receiving device 102 operative to operate in the communications network 100. The receiving device 102 may comprise the processing circuitry 1204 and the memory 1205, said memory 1205 containing instructions executable by said processing circuitry 1204, whereby the receiving device 102 is further operative to perform the actions described herein in relation to the receiving device 102, e.g., in Figure 10, and/or Figure 16-20.

As used herein, the expression "at least one of:" followed by a list of alternatives separated by commas, and wherein the last alternative is preceded by the "and" term, may be understood to mean that only one of the list of alternatives may apply, more than one of the list of alternatives may apply or all of the list of alternatives may apply. This expression may be understood to be equivalent to the expression "at least one of:" followed by a list of alternatives separated by commas, and wherein the last alternative is preceded by the "or" term.

### Further examples related to embodiments herein

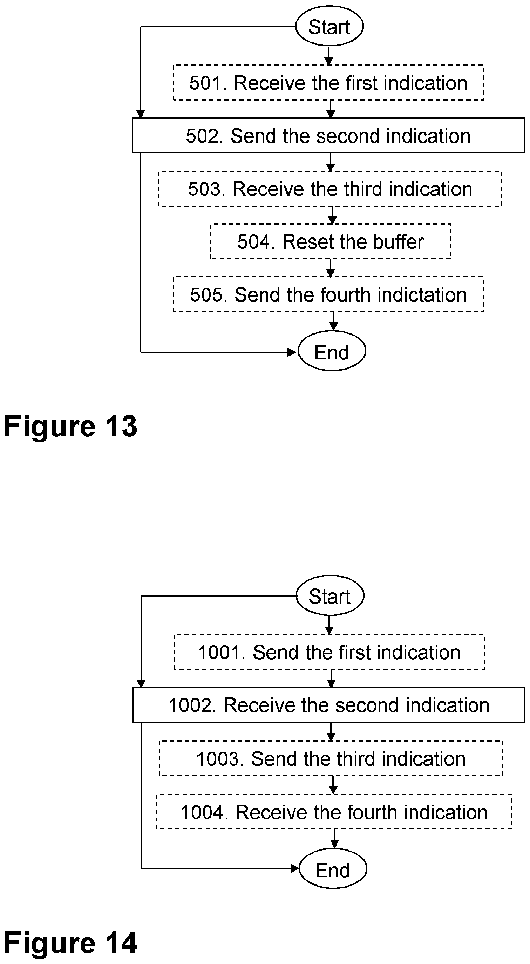

In examples related to embodiments herein, the method, performed by the transmitting device 101 may comprise one or more of the actions described in relation to Figure 5. In some examples, all the actions may be performed. In some examples, one or more actions may be performed. One or more examples may be combined, where applicable. All possible combinations are not described to simplify the description. **Figure 13**, for example, depicts an example of a method related to embodiments herein, wherein the transmitting device 101 may perform Action 502, alone, or in combination with one or more of Action 501, Action 503, Action 504, and/or Action 505. In Figure 13, optional actions are indicated with dashed lines. Some actions may be performed in a different order than that shown in Figure 13. The method of the example of Figure 13 related to embodiments herein, may also be performed by the transmitting device 101, similarly to how it was described in Figure 11.

In other examples related to embodiments herein, the method, performed by the receiving device 102 may comprise one or more of the actions described in relation to Figure 10. In some examples, all the actions may be performed. In some examples, one or more actions may be performed. One or more examples may be combined, where applicable. All possible combinations are not described to simplify the description. **Figure 14**, for example, depicts an example of a method related to embodiments herein, wherein the receiving device 102 may perform Action 1002 alone, or in combination with one or more of Action 1001, Action 1003, and/or Action 1004. In Figure 14, optional actions are indicated with dashed lines. Some actions may be performed in a different order than that shown in Figure 14. The method of the example of Figure 14 related to embodiments herein, may also be performed by the receiving device 102, similarly to how it was described in Figure 12.

### Further Extensions And Variations

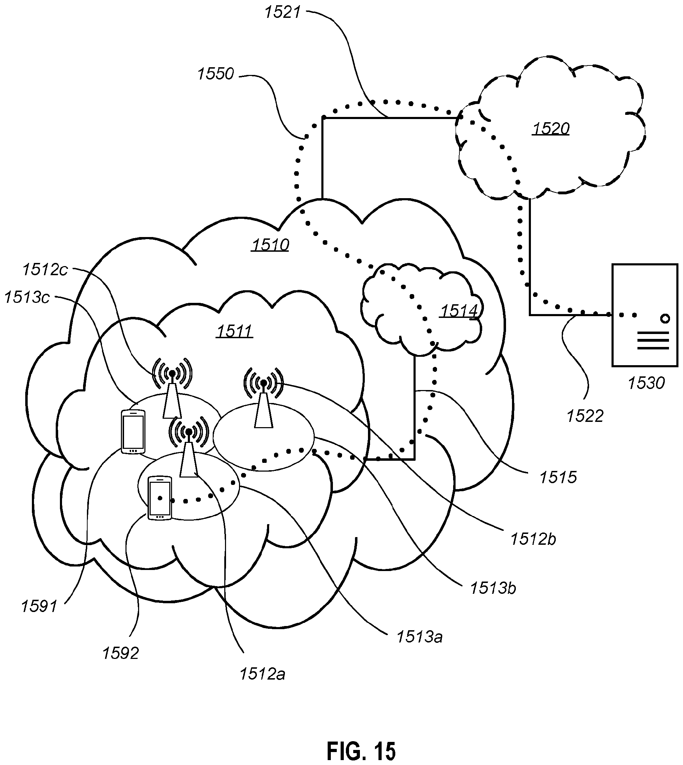

### Figure 15: Telecommunication network connected via an intermediate network to a host computer in accordance with some embodiments

With reference to FIGURE 15, in accordance with an embodiment, a communication system includes telecommunication network 1510 such as the communications network 100, for example, a 3GPP-type cellular network, which comprises access network 1511, such as a radio access network, and core network 1514. Access network 1511 comprises a plurality of network nodes such as the network node 110. For example, base stations 1512a, 1512b, 1512c, such as NBs, eNBs, gNBs or other types of wireless access points, each defining a corresponding coverage area 1513a, 1513b, 1513c. Each base station 1512a, 1512b, 1512c is connectable to core network 1514 over a wired or wireless connection 1515. A plurality of wireless devices, such as the wireless device 120 are comprised in the communications network 100. In Figure 15, a first UE 1591 located in coverage area 1513c is configured to wirelessly connect to, or be paged by, the corresponding base station 1512c. A second UE 1592 in coverage area 1513a is wirelessly connectable to the corresponding base station 1512a. While a plurality of UEs 1591, 1592 are illustrated in this example, the disclosed embodiments are equally applicable to a situation where a sole UE is in the coverage area or where a sole UE is connecting to the corresponding base station 1512. Any of the UEs 1591, 1592 are examples of the wireless device 120.

Telecommunication network 1510 is itself connected to host computer 1530, which may be embodied in the hardware and/or software of a standalone server, a cloud-implemented server, a distributed server or as processing resources in a server farm. Host computer 1530 may be under the ownership or control of a service provider, or may be operated by the service provider or on behalf of the service provider. Connections 1521 and 1522 between telecommunication network 1510 and host computer 1530 may extend directly from core network 1514 to host computer 1530 or may go via an optional intermediate network 1520. Intermediate network 1520 may be one of, or a combination of more than one of, a public, private or hosted network; intermediate network 1520, if any, may be a backbone network or the Internet; in particular, intermediate network 1520 may comprise two or more sub-networks (not shown).

The communication system of Figure 15 as a whole enables connectivity between the connected UEs 1591, 1592 and host computer 1530. The connectivity may be described as an over-the-top (OTT) connection 1550. Host computer 1530 and the connected UEs 1591, 1592 are configured to communicate data and/or signaling via OTT connection 1550, using access network 1511, core network 1514, any intermediate network 1520 and possible further infrastructure (not shown) as intermediaries. OTT connection 1550 may be transparent in the sense that the participating communication devices through which OTT connection 1550 passes are unaware of routing of uplink and downlink communications. For example, base station 1512 may not or need not be informed about the past routing of an incoming downlink communication with data originating from host computer 1530 to be forwarded (e.g., handed over) to a connected UE 1591. Similarly, base station 1512 need not be aware of the future routing of an outgoing uplink communication originating from the UE 1591 towards the host computer 1530.

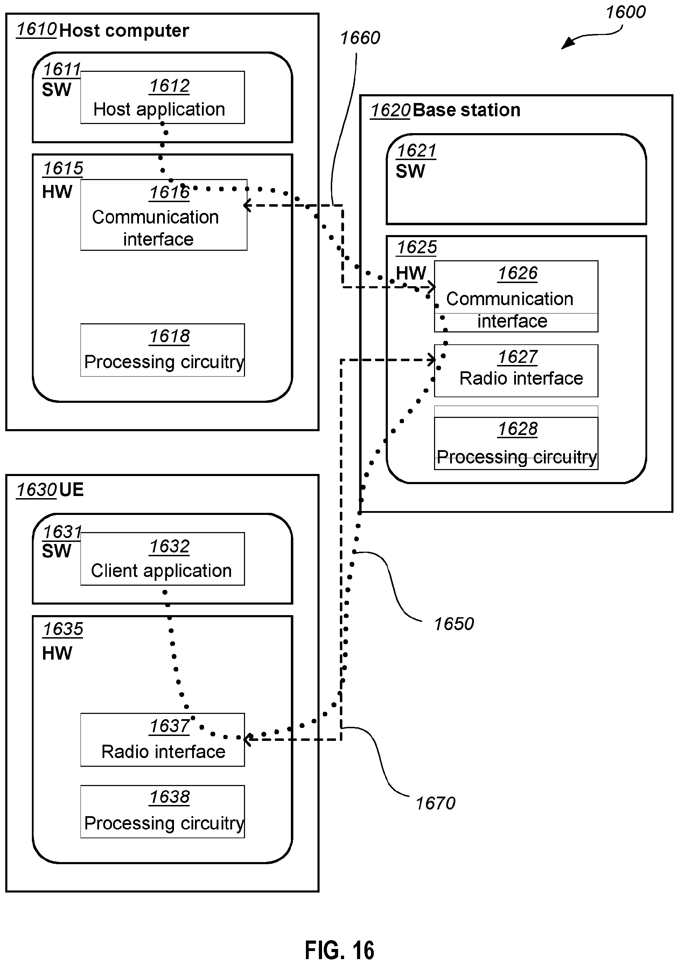

In relation to Figures 16, 17, 18, 19, and 20, which are described next, it may be understood that a UE is an example of the transmitting device 101, and that any description provided for the UE equally applies to the transmitting device 101. It may be also understood that the base station is an example of the receiving device 102, and that any description provided for the base station equally applies to the receiving device 102.

### Figure 16: Host computer communicating via a base station with a user equipment over a partially wireless connection in accordance with some embodiments

Example implementations, in accordance with an embodiment, of the transmitting device 101, e.g., a UE, the receiving device 102, e.g., a base station and host computer discussed in the preceding paragraphs will now be described with reference to Figure 16. In communication system 1600, such as the communications network 100, host computer 1610 comprises hardware 1615 including communication interface 1616 configured to set up and maintain a wired or wireless connection with an interface of a different communication device of communication system 1600. Host computer 1610 further comprises processing circuitry 1618, which may have storage and/or processing capabilities. In particular, processing circuitry 1618 may comprise one or more programmable processors, application-specific integrated circuits, field programmable gate arrays or combinations of these (not shown) adapted to execute instructions. Host computer 1610 further comprises software 1611, which is stored in or accessible by host computer 1610 and executable by processing circuitry 1618. Software 1611 includes host application 1612. Host application 1612 may be operable to provide a service to a remote user, such as UE 1630 connecting via OTT connection 1650 terminating at UE 1630 and host computer 1610. In providing the service to the remote user, host application 1612 may provide user data which is transmitted using OTT connection 1650.

Communication system 1600 further includes the receiving device 102, exemplified in Figure 16 as a base station 1620 provided in a telecommunication system and comprising hardware 1625 enabling it to communicate with host computer 1610 and with UE 1630. Hardware 1625 may include communication interface 1626 for setting up and maintaining a wired or wireless connection with an interface of a different communication device of communication system 1600, as well as radio interface 1627 for setting up and maintaining at least wireless connection 1670 with the transmitting device 101, exemplified in Figure 16 as a UE 1630 located in a coverage area (not shown in Figure 16) served by base station 1620. Communication interface 1626 may be configured to facilitate connection 1660 to host computer 1610. Connection 1660 may be direct or it may pass through a core network (not shown in Figure 16) of the telecommunication system and/or through one or more intermediate networks outside the telecommunication system. In the embodiment shown, hardware 1625 of base station 1620 further includes processing circuitry 1628, which may comprise one or more programmable processors, application-specific integrated circuits, field programmable gate arrays or combinations of these (not shown) adapted to execute instructions. Base station 1620 further has software 1621 stored internally or accessible via an external connection.

Communication system 1600 further includes UE 1630 already referred to. Its hardware 1635 may include radio interface 1637 configured to set up and maintain wireless connection 1670 with a base station serving a coverage area in which UE 1630 is currently located. Hardware 1635 of UE 1630 further includes processing circuitry 1638, which may comprise one or more programmable processors, application-specific integrated circuits, field programmable gate arrays or combinations of these (not shown) adapted to execute instructions. UE 1630 further comprises software 1631, which is stored in or accessible by UE 1630 and executable by processing circuitry 1638. Software 1631 includes client application 1632. Client application 1632 may be operable to provide a service to a human or non-human user via UE 1630, with the support of host computer 1610. In host computer 1610, an executing host application 1612 may communicate with the executing client application 1632 via OTT connection 1650 terminating at UE 1630 and host computer 1610. In providing the service to the user, client application 1632 may receive request data from host application 1612 and provide user data in response to the request data. OTT connection 1650 may transfer both the request data and the user data. Client application 1632 may interact with the user to generate the user data that it provides.

It is noted that host computer 1610, base station 1620 and UE 1630 illustrated in Figure 16 may be similar or identical to host computer 1530, one of base stations 1512a, 1512b, 1512c and one of UEs 1591, 1592 of Figure 15, respectively. This is to say, the inner workings of these entities may be as shown in Figure 16 and independently, the surrounding network topology may be that of Figure 15.

In Figure 16, OTT connection 1650 has been drawn abstractly to illustrate the communication between host computer 1610 and UE 1630 via base station 1620, without explicit reference to any intermediary devices and the precise routing of messages via these devices. Network infrastructure may determine the routing, which it may be configured to hide from UE 1630 or from the service provider operating host computer 1610, or both. While OTT connection 1650 is active, the network infrastructure may further take decisions by which it dynamically changes the routing (e.g., on the basis of load balancing consideration or reconfiguration of the network).

Wireless connection 1670 between UE 1630 and base station 1620 is in accordance with the teachings of the embodiments described throughout this disclosure. One or more of the various embodiments improve the performance of OTT services provided to UE 1630 using OTT connection 1650, in which wireless connection 1670 forms the last segment. More precisely, the teachings of these embodiments may improve the latency, signalling overhead, and service interruption and thereby provide benefits such as reduced user waiting time, better responsiveness and extended battery lifetime.

A measurement procedure may be provided for the purpose of monitoring data rate, latency and other factors on which the one or more embodiments improve. There may further be an optional network functionality for reconfiguring OTT connection 1650 between host computer 1610 and UE 1630, in response to variations in the measurement results. The measurement procedure and/or the network functionality for reconfiguring OTT connection 1650 may be implemented in software 1611 and hardware 1615 of host computer 1610 or in software 1631 and hardware 1635 of UE 1630, or both. In embodiments, sensors (not shown) may be deployed in or in association with communication devices through which OTT connection 1650 passes; the sensors may participate in the measurement procedure by supplying values of the monitored quantities exemplified above, or supplying values of other physical quantities from which software 1611, 1631 may compute or estimate the monitored quantities. The reconfiguring of OTT connection 1650 may include message format, retransmission settings, preferred routing etc.; the reconfiguring need not affect base station 1620, and it may be unknown or imperceptible to base station 1620. Such procedures and functionalities may be known and practiced in the art. In certain embodiments, measurements may involve proprietary UE signaling facilitating host computer 1610's measurements of throughput, propagation times, latency and the like. The measurements may be implemented in that software 1611 and 1631 causes messages to be transmitted, in particular empty or 'dummy' messages, using OTT connection 1650 while it monitors propagation times, errors etc.

The transmitting device 101 may comprise an arrangement as shown in Figure 11 or in Figure 16.

The transmitting device 101 may also comprise a client application 1632 or a client application circuit, which may be configured to communicate user data with a host application circuit in a host computer 1610, e.g., via another link such as 1650.

The transmitting device 101 may comprise an interface unit to facilitate communications between the transmitting device 101 and other nodes or devices, e.g., the receiving device 102, the host computer 1610, or any of the other nodes. In some particular examples, the interface may, for example, include a transceiver configured to transmit and receive radio signals over an air interface in accordance with a suitable standard.

The receiving device 102 may comprise an arrangement as shown in Figure 12 or in Figure 16.

The receiving device 102 may also comprise a communication interface 1626 and/or a radio interface 1627, which may be configured to communicate user data with a host application circuit in a host computer 1610, e.g., via another link such as 1650.

The receiving device 102 may comprise an interface unit to facilitate communications between the receiving device 102 and other nodes or devices, e.g., the receiving device 102, the host computer 1610, or any of the other nodes. In some particular examples, the interface may, for example, include a transceiver configured to transmit and receive radio signals over an air interface in accordance with a suitable standard.

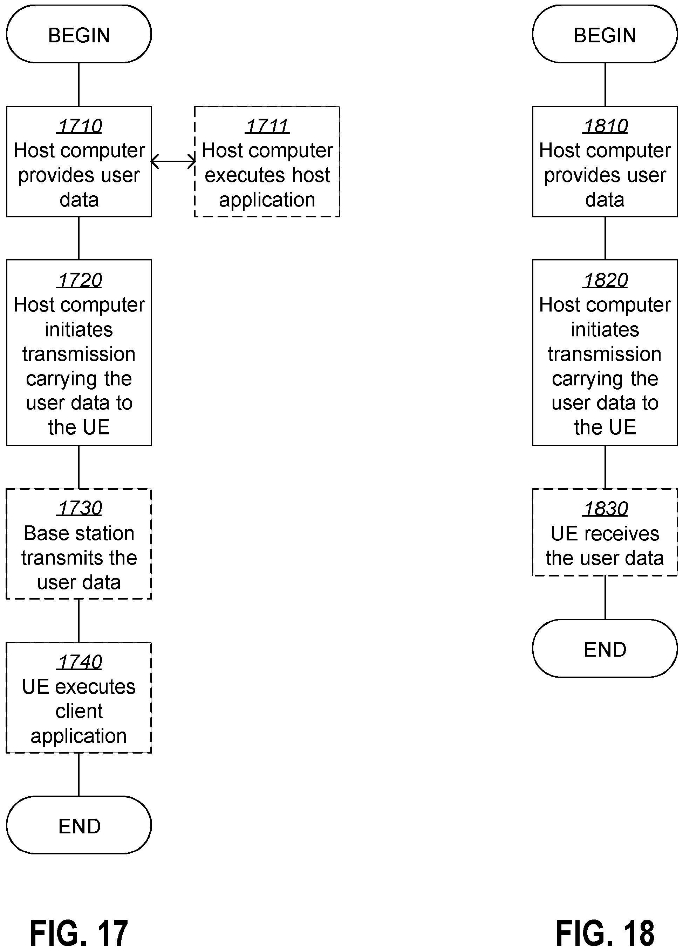

### Figure 17: Methods implemented in a communication system including a host computer, a base station and a user equipment in accordance with some embodiments

Figure 17 is a flowchart illustrating a method implemented in a communication system, in accordance with one embodiment. The communication system includes a host computer, a base station and a UE which may be those described with reference to Figures 15 and 16. For simplicity of the present disclosure, only drawing references to Figure 17 will be included in this section. In step 1710, the host computer provides user data. In substep 1711 (which may be optional) of step 1710, the host computer provides the user data by executing a host application. In step 1720, the host computer initiates a transmission carrying the user data to the UE. In step 1730 (which may be optional), the base station transmits to the UE the user data which was carried in the transmission that the host computer initiated, in accordance with the teachings of the embodiments described throughout this disclosure. In step 1740 (which may also be optional), the UE executes a client application associated with the host application executed by the host computer.

### Figure 18: Methods implemented in a communication system including a host computer, a base station and a user equipment in accordance with some embodiments

Figure 18 is a flowchart illustrating a method implemented in a communication system, in accordance with one embodiment. The communication system includes a host computer, a base station and a UE which may be those described with reference to Figures 15 and 16. For simplicity of the present disclosure, only drawing references to Figure 18 will be included in this section. In step 1810 of the method, the host computer provides user data. In an optional substep (not shown) the host computer provides the user data by executing a host application. In step 1820, the host computer initiates a transmission carrying the user data to the UE. The transmission may pass via the base station, in accordance with the teachings of the embodiments described throughout this disclosure. In step 1830 (which may be optional), the UE receives the user data carried in the transmission.

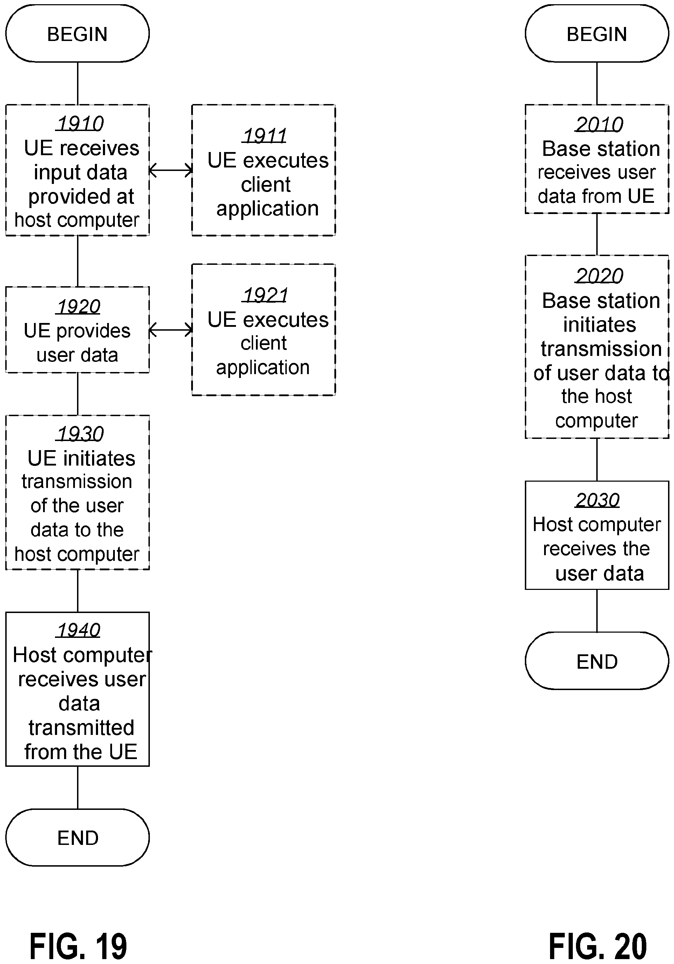

### Figure 19: Methods implemented in a communication system including a host computer, a base station and a user equipment in accordance with some embodiments

Figure 19 is a flowchart illustrating a method implemented in a communication system, in accordance with one embodiment. The communication system includes a host computer, a base station and a UE which may be those described with reference to Figures 15 and 16. For simplicity of the present disclosure, only drawing references to Figure 19 will be included in this section. In step 1910 (which may be optional), the UE receives input data provided by the host computer. Additionally or alternatively, in step 1920, the UE provides user data. In substep 1921 (which may be optional) of step 1920, the UE provides the user data by executing a client application. In substep 1911 (which may be optional) of step 1910, the UE executes a client application which provides the user data in reaction to the received input data provided by the host computer. In providing the user data, the executed client application may further consider user input received from the user. Regardless of the specific manner in which the user data was provided, the UE initiates, in substep 1930 (which may be optional), transmission of the user data to the host computer. In step 1940 of the method, the host computer receives the user data transmitted from the UE, in accordance with the teachings of the embodiments described throughout this disclosure.

### Figure 20: Methods implemented in a communication system including a host computer, a base station and a user equipment in accordance with some embodiments

Figure 20 is a flowchart illustrating a method implemented in a communication system, in accordance with one embodiment. The communication system includes a host computer, a base station and a UE which may be those described with reference to Figures 15 and 16. For simplicity of the present disclosure, only drawing references to Figure 20 will be included in this section. In step 2010 (which may be optional), in accordance with the teachings of the embodiments described throughout this disclosure, the base station receives user data from the UE. In step 2020 (which may be optional), the base station initiates transmission of the received user data to the host computer. In step 2030 (which may be optional), the host computer receives the user data carried in the transmission initiated by the base station.

The transmitting device 101 embodiments relate to Figure 5, Figure 6, Figure 7, Figure 8, Figure 9, Figure 11, and Figures 16-20.

The receiving device 102 embodiments relate to Figure 6, Figure 7, Figure 8, Figure 9, Figure 10, Figure 12, and Figures 16-20.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

### REFERENCES

[1] IETF RFC 1951, "DEFLATE Compressed Data Format Specification version 1.3".
[2] 3gpp TS 36.323, "Evolved Universal Terrestrial Radio Access (E-UTRA); Packet Data Convergence Protocol (PDCP) specification".
[3] 3gpp TR 36.754 v.0.0.2, "Study on UL data compression for E-UTRA (Release 15)".
[4] R2-1712070, "Running 36.323 CR for Introduction of UDC"
[5] RP-172076, "UL data compression in LTE" UDC Wl

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- 3GPP: 3rd Generation Partnership Project
- 5G: 5th Generation
- DL: Downlink
- eNB: E-UTRAN NodeB
- E-UTRA: Evolved UTRA
- E-UTRAN: Evolved UTRAN
- GERAN: GSM EDGE Radio Access Network
- gNB: Base station in NR
- GSM: Global System for Mobile communication
- HSPA: High Speed Packet Access
- LTE: Long-Term Evolution
- OFDM: Orthogonal Frequency Division Multiplexing
- PDCP: Packet Data Convergence Protocol
- UE: User Equipment
- UL: Uplink
- UMTS: Universal Mobile Telecommunication System
- UTRA: Universal Terrestrial Radio Access
- UTRAN: Universal Terrestrial Radio Access Network
- WCDMA: Wide CDMA
- WLAN: Wide Local Area Network
- UDC: Uplink Data Compression

## Claims

1. A method performed by a transmitting device (101) operating in a communications network (100), the method comprising:
- *receiving* (503) an indication from a receiving device (102) operating in the communications network (100), the indication instructing the transmitting device (101) to perform a buffer reset, wherein the indication is a value in a field (906) in a Protocol Data Unit, PDU, received from the receiving device (102), wherein the PDU is a Packet Data Convergence Protocol, PDCP, control PDU,
- *resetting* (504) the buffer, based on the received indication, wherein the indication is a third indication, and
- *sending* (505) a fourth indication to the receiving device (102), the fourth indication indicating that the buffer reset has been performed.

2. The method according to claim 1, wherein the method further comprises, before receiving (503) the third indication from the receiving device (102):
- *receiving* (501) a first indication from the receiving device (102), the first indication indicating a preference to the transmitting device (101) to activate or deactivate an uplink data compression feature.

3. The method according to claim 2, wherein the first indication is at least one of:
a. a first value in a first field (602) of a first PDU, the first field (602) indicating a type of the PDU, and
b. a second value in a second field (604, 705) of the first PDU, the second field (604, 705) indicating at least one of: a) an Activate/Deactivate, A/D, state, and b) a Normal Operation/Temporary Deactivation state.

4. The method according to claim any of claims 1-3, and wherein the method further comprises, before receiving (503) the third indication from the receiving device (102):
- *sending* (502) a second indication to the receiving device (102), the second indication being comprised in a control PDU, wherein the second indication indicates one of:
i. an uplink data compression feature is enabled in the transmitting device (101) and a header comprising information about the enabled uplink data compression feature of one or more data PDUs is to be present in the one or more data PDUs to be sent by the transmitting device (101) after sending the second indication, and
ii. the uplink data compression feature is disabled in the transmitting device (101) and the header comprising information about the enabled uplink data compression feature of one or more data PDUs is to be absent in the one or more data PDUs to be sent by the transmitting device (101) after sending the second indication.

5. The method according to claim 4, wherein the second indication is one of:
a. a third value in a third field (802) of the control PDU, the third field (802) indicating a type of PDU, and
b. a fourth value in a fourth field (803) of the control PDU, the fourth field (803) indicating an Enabled/Disabled, E/D, state.

6. The method according to any of claims 4-5, wherein the second indication further indicates one of:
a. a sequence number of a last packet sent by the transmitting device (101) before an enabled or disabled state of the transmitting device (101) switched;
b. a sequence number of a first packet sent by the transmitting device (101) after the enabled or disabled state of the transmitting device (101) switched.

7. A method performed by a receiving device (102) operating in a communications network (100), the method comprising:
- *sending* (1003) an indication to a transmitting device (101) operating in the communications network (100), the indication instructing the transmitting device (101) to perform a buffer reset, wherein the indication is a value in a field (906) in a Protocol Data Unit, PDU, sent to the transmitting device (101) , wherein the PDU is a Packet Data Convergence Protocol, PDCP, control PDU, wherein the indication is a third indication, and
- *receiving* (1004) a fourth indication from the transmitting device (101), the fourth indication indicating that the buffer reset has been performed.

8. The method according to claim 7, wherein the method further comprises, before sending (1003) the third indication to the transmitting device (101):
- *sending* (1001) a first indication to the transmitting device (101), the first indication indicating a preference to the transmitting device (101) to activate or deactivate a uplink data compression feature.

9. The method according to claim 8, wherein PDU is a second PDU, and wherein the first indication is at least one of:
a. a first value in a first field (602) of a first PDU, the first field (602) indicating a type of the PDU, and
b. a second value in a second field (604, 705) of the first PDU, the second field (604, 705) indicating at least one of: a) an Activate/Deactivate, A/D, state, and b) a Normal Operation/Temporary Deactivation state.

10. The method according to any of claims 7-9, wherein the method further comprises, before sending (1003) the third indication to the transmitting device (101):
- *receiving* (1002) a second indication from a transmitting device (101) operating in the communications network (100), the second indication being comprised in a control PDU wherein the second indication indicates one of:
a) an uplink data compression feature is enabled in the transmitting device (101) and a header comprising information about the enabled uplink data compression feature of one or more data PDUs is to be present in the one or more data PDUs to be received from the transmitting device (101) after receiving the indication, and
b) the uplink data compression feature is disabled in the transmitting device (101) and the header comprising information about the enabled uplink data compression feature of one or more data PDUs is to be absent in the one or more data PDUs to be received from the transmitting device (101) after receiving the second indication.

11. The method according to claim 10, wherein the second indication is one of:
a. a third value in a third field (802) of the control PDU, the third field (802) indicating a type of PDU, and
b. a fourth value in a fourth field (803) of the control PDU, the fourth field (803) indicating an Enabled/Disabled, E/D, state.

12. The method according to any of claims 10-11, wherein the second indication further indicates one of:
a. a sequence number of a last packet sent by the transmitting device (101) before an enabled or disabled state of the transmitting device (101) switched;
b. a sequence number of a first packet sent by the transmitting device (101) after the enabled or disabled state of the transmitting device (101) switched.

13. A transmitting device (101) configured to operate in a communications network (100), the transmitting device (101) being further configured to:
- receive an indication from a receiving device (102) configured to operate in the communications network (100), the indication being configured to instruct the transmitting device (101) to perform a buffer reset, wherein the indication is configured to be a value in a field (906) in a Protocol Data Unit, PDU, configured to be received from the receiving device (102) , wherein the PDU is configured to be a Packet Data Convergence Protocol, PDCP, control PDU,
- reset the buffer, based on the indication configured to be received, and, wherein the indication is configured to be a third indication,
- send a fourth indication to the receiving device (102), the fourth indication being configured to indicate that the buffer reset has been performed.

14. The transmitting device (101) according to claim 13, wherein the transmitting device (101) is further configured to, before receiving the third indication from the receiving device:
- receive a first indication from the receiving device (102), the first indication being configured to indicate a preference to the transmitting device (101) to activate or deactivate the uplink data compression feature.

15. The transmitting device (101) according to claim 14, wherein PDU is configured to be a second PDU, and wherein the first indication is configured to be at least one of:
a. a first value in a first field (602) of a first PDU, the first field (602) being configured to indicate a type of the PDU, and
b. a second value in a second field (604, 705) of the first PDU, the second field (604, 705) being configured to indicate at least one of: a) an Activate/Deactivate, A/D, state, and b) a Normal Operation/Temporary Deactivation state.

16. The transmitting device (101) according to any of claims 13-15, wherein the transmitting device (101) is further configured to, before receiving the third indication from the receiving device (102):
- send a second indication to a receiving device (102) configured to operate in the communications network (100), the second indication being configured to be comprised in a control PDU wherein the second indication is configured to indicate one of:
a) an uplink data compression feature is enabled in the transmitting device (101) and a header comprising information about the enabled uplink data compression feature of one or more data PDUs is to be present in the one or more data PDUs configured to be sent by the transmitting device (101) after sending the second indication, and
b) the uplink data compression feature is disabled in the transmitting device (101) and the header comprising information about the enabled uplink data compression feature of one or more data PDUs is to be absent in the one or more data PDUs configured to be to be sent by the transmitting device (101) after sending the second indication.

17. The transmitting device (101) according to claim 16, wherein the second indication is configured to be one of:
a. a third value in a third field (802) of the control PDU, the third field (802) being configured to indicate a type of PDU, and
b. a fourth value in a fourth field (803) of the control PDU, the fourth field (803) being configured to indicate an Enabled/Disabled, E/D, state.

18. A receiving device (102) configured to operate in a communications network (100), the receiving device (102) being further configured to:
- send an indication to a transmitting device (101) configured to operate in the communications network (100), the indication being configured to instruct the transmitting device (101) to perform a buffer reset, wherein the indication is configured to be a value in a field (906) in a Protocol Data Unit, PDU, configured to be sent to the transmitting device (101) , wherein the PDU is configured to be a Packet Data Convergence Protocol, PDCP, control PDU, and, wherein the indication is configured to be a third indication,
- receive a fourth indication from the transmitting device (101), the fourth indication being configured to indicate that the buffer reset has been performed.

19. The receiving device (102) according to claim 18, wherein the receiving device (102) is further configured to, before sending the third indication to the transmitting device (101):
- send a first indication to the transmitting device (101), the first indication being configured to indicate a preference to the transmitting device (101) to activate or deactivate a uplink data compression feature.

20. The receiving device (102) according to claim 19, wherein PDU is configured to be a second PDU, and wherein the first indication is configured to be at least one of:
a. a first value in a first field (602) of a first PDU, the first field (602) being configured to indicate a type of the PDU, and
b. a second value in a second field (604, 705) of the first PDU, the second field (604, 705) being configured to indicate at least one of: a) an Activate/Deactivate, A/D, state, and b) a Normal Operation/Temporary Deactivation state.

21. The receiving device (102) according to any of claims 18-20, wherein the receiving device (102) is further configured to, before sending the third indication to the transmitting device (101):
- receive a second indication from a transmitting device (101) configured to operate in the communications network (100), the second indication being configured to be comprised in a control Protocol Data Unit, PDU, wherein the second indication is configured to indicate one of:
i. an uplink data compression feature is enabled in the transmitting device (101) and a header comprising information about the enabled uplink data compression feature of one or more data PDUs is to be present in the one or more data PDUs configured to be received from the transmitting device (101) after receiving the second indication, and
ii. the uplink data compression feature is disabled in the transmitting device (101) and the header comprising information about the enabled uplink data compression feature of one or more data PDUs is to be absent in the one or more data PDUs configured to be received from the transmitting device (101) after receiving the second indication.

22. The receiving device (102) according to claim 21, wherein the second indication is configured to be one of:
a. a third value in a third field (802) of the control PDU, the third field (802) being configured to indicate a type of PDU, and
b. a fourth value in a fourth field (803) of the control PDU, the fourth field (803) being configured to indicate an Enabled/Disabled, E/D, state.

## Patentansprüche

1. Verfahren, das von einer Sendevorrichtung (101) durchgeführt wird, die in einem Kommunikationsnetzwerk (100) operiert, wobei das Verfahren umfasst:
- Empfangen (503) einer Anzeige von einer Empfangsvorrichtung (102), die im Kommunikationsnetzwerk (100) operiert, wobei die Anzeige die Sendevorrichtung (101) zum Durchführen einer Pufferrücksetzung anweist, wobei die Anzeige ein Wert in einem Feld (906) in einer Protokolldateneinheit, PDU, ist, die von der Empfangsvorrichtung (102) empfangen wird, wobei die PDU eine Steuer-PDU eines Paketdatenkonvergenzprotokolls, PDCP, ist.
- Rücksetzen (504) des Puffers basierend auf der empfangenen Anzeige, wobei die Anzeige eine dritte Anzeige ist, und
- Senden (505) einer vierten Anzeige an die Empfangsvorrichtung (102), wobei die vierte Anzeige anzeigt, dass die Pufferrücksetzung durchgeführt wurde.

2. Verfahren nach Anspruch 1, wobei das Verfahren vor dem Empfangen (503) der dritten Anzeige von der Empfangsvorrichtung (102) ferner umfasst:
- Empfangen (501) einer ersten Anzeige von der Empfangsvorrichtung (102), wobei die erste Anzeige eine Präferenz für die Sendevorrichtung (101) zum Aktivieren oder Deaktivieren eines Uplink-Datenkompressionsmerkmals anzeigt.

3. Verfahren nach Anspruch 2, wobei die erste Anzeige mindestens eines ist von:
a. einem ersten Wert in einem ersten Feld (602) einer ersten PDU, wobei das erste Feld (602) einen Typ der PDU anzeigt, und
b. einem zweiten Wert in einem zweiten Feld (604, 705) der ersten PDU, wobei das zweite Feld (604, 705) mindestens eines anzeigt von: a) einem Aktivieren/Deaktivieren-,A/D-,Zustand und b) einem Zustand normalen Betriebs/temporärer Deaktivierung.

4. Verfahren nach einem der Ansprüche 1 bis 3, wobei das Verfahren vor dem Empfangen (503) der dritten Anzeige von der Empfangsvorrichtung (102) ferner umfasst:
- Senden (502) einer zweiten Anzeige an die Empfangsvorrichtung (102), wobei die zweite Anzeige in einer Steuer-PDU enthalten ist, wobei die zweite Anzeige eines von Folgendem anzeigt:
i. ein Uplink-Datenkompressionsmerkmal wird in der Sendevorrichtung (101) aktiviert und ein Header mit Informationen über das aktivierte Uplink-Datenkompressionsmerkmal einer oder mehrerer Daten-PDUs muss in der einen oder den mehreren Daten-PDUs vorhanden sein, die von der Sendevorrichtung (101) nach dem Senden der zweiten Anzeige gesendet werden sollen, und
ii. das Uplink-Datenkompressionsmerkmal wird in der Sendevorrichtung (101) deaktiviert und der Header mit Informationen über das aktivierte Uplink-Datenkompressionsmerkmal einer oder mehrerer Daten-PDUs muss in der einen oder den mehreren Daten-PDUs fehlen, die von der Sendevorrichtung (101) nach dem Senden der zweiten Anzeige gesendet werden sollen.

5. Verfahren nach Anspruch 4, wobei die zweite Anzeige eines ist von:
a. einem dritten Wert in einem dritten Feld (802) der Steuer-PDU, wobei das dritte Feld (802) einen Typ von PDU anzeigt, und
b. einem vierten Wert in einem vierten Feld (803) der Steuer-PDU, wobei das vierte Feld (803) einen Aktiviert/Deaktiviert-,E/D-,Zustand anzeigt.

6. Verfahren nach einem der Ansprüche 4 bis 5, wobei die zweite Anzeige ferner eines anzeigt von:
a. einer Folgenummer eines letzten Pakets, das von der Sendevorrichtung (101) gesendet wird, bevor ein Aktiviert- oder Deaktiviert-Zustand der Sendevorrichtung (101) gewechselt wird;
b. einer Folgenummer eines ersten Pakets, das von der Sendevorrichtung (101) gesendet wird, nachdem der Aktiviert- oder Deaktiviert-Zustand der Sendevorrichtung (101) gewechselt wird.

7. Verfahren, das von einer Empfangsvorrichtung (102) durchgeführt wird, die in einem Kommunikationsnetzwerk (100) operiert, wobei das Verfahren umfasst:
- Senden (1003) einer Anzeige an eine Sendevorrichtung (101), die im Kommunikationsnetzwerk (100) operiert, wobei die Anzeige die Sendevorrichtung (101) zum Durchführen einer Pufferrücksetzung anweist, wobei die Anzeige ein Wert in einem Feld (906) in einer Protokolldateneinheit, PDU, ist, die an die Sendevorrichtung (101) gesendet wird, wobei die PDU eine Steuer-PDU eines Paketdatenkonvergenzprotokolls, PDCP, ist, wobei die Anzeige eine dritte Anzeige ist, und
- Empfangen (1004) einer vierten Anzeige von der Sendevorrichtung (101), wobei die vierte Anzeige anzeigt, dass die Pufferrücksetzung durchgeführt wurde.

8. Verfahren nach Anspruch 7, wobei das Verfahren vor dem Senden (1003) der dritten Anzeige an die Sendevorrichtung (101) ferner umfasst:
- Senden (1001) einer ersten Anzeige an die Sendevorrichtung (101), wobei die erste Anzeige eine Präferenz für die Sendevorrichtung (101) zum Aktivieren oder Deaktivieren eines Uplink-Datenkompressionsmerkmals anzeigt.

9. Verfahren nach Anspruch 8, wobei die PDU eine zweite PDU ist, und wobei die erste Anzeige mindestens eines ist von:
a. einem ersten Wert in einem ersten Feld (602) einer ersten PDU, wobei das erste Feld (602) einen Typ der PDU anzeigt, und
b. einem zweiten Wert in einem zweiten Feld (604, 705) der ersten PDU, wobei das zweite Feld (604, 705) mindestens eines anzeigt von: a) einem Aktivieren/Deaktivieren-,A/D-,Zustand und b) einem Zustand normalen Betriebs/temporärer Deaktivierung.

10. Verfahren nach einem der Ansprüche 7 bis 9, wobei das Verfahren vor dem Senden (1003) der dritten Anzeige an die Sendevorrichtung (101) ferner umfasst:
- Empfangen (1002) einer zweiten Anzeige von einer Sendevorrichtung (101), die im Kommunikationsnetzwerk (100) operiert, wobei die zweite Anzeige in einer Steuer-PDU enthalten ist, wobei die zweite Anzeige eines von Folgendem anzeigt:
a) ein Uplink-Datenkompressionsmerkmal wird in der Sendevorrichtung (101) aktiviert und ein Header mit Informationen über das aktivierte Uplink-Datenkompressionsmerkmal einer oder mehrerer Daten-PDUs muss in der einen oder den mehreren Daten-PDUs vorhanden sein, die von der Sendevorrichtung (101) nach dem Empfangen der zweiten Anzeige empfangen werden sollen, und
b) das Uplink-Datenkompressionsmerkmal wird in der Sendevorrichtung (101) deaktiviert und der Header mit Informationen über das aktivierte Uplink-Datenkompressionsmerkmal einer oder mehrerer Daten-PDUs muss in der einen oder den mehreren Daten-PDUs fehlen, die von der Sendevorrichtung (101) nach dem Empfangen der zweiten Anzeige empfangen werden sollen.

11. Verfahren nach Anspruch 10, wobei die zweite Anzeige mindestens eines ist von:
a. einem dritten Wert in einem dritten Feld (802) der Steuer-PDU, wobei das dritte Feld (802) einen Typ von PDU anzeigt, und
b. einem vierten Wert in einem vierten Feld (803) der Steuer-PDU, wobei das vierte Feld (803) einen Aktiviert/Deaktiviert-,E/D-,Zustand anzeigt.

12. Verfahren nach einem der Ansprüche 10 bis 11, wobei die zweite Anzeige ferner eines anzeigt von:
a. einer Folgenummer eines letzten Pakets, das von der Sendevorrichtung (101) gesendet wird, bevor ein Aktiviert- oder Deaktiviert-Zustand der Sendevorrichtung (101) gewechselt wird;
b. einer Folgenummer eines ersten Pakets, das von der Sendevorrichtung (101) gesendet wird, nachdem der Aktiviert- oder Deaktiviert-Zustand der Sendevorrichtung (101) gewechselt wird.

13. Sendevorrichtung (101), die zum Betrieb in einem Kommunikationsnetzwerk (100) konfiguriert ist, wobei die Sendevorrichtung (101) ferner konfiguriert ist zum:
- Empfangen einer Anzeige von einer Empfangsvorrichtung (102), die zum Betrieb im Kommunikationsnetzwerk (100) konfiguriert ist, wobei die Anzeige zum Anweisen der Sendevorrichtung (101) zum Durchführen einer Pufferrücksetzung konfiguriert ist, wobei die Anzeige so konfiguriert ist, dass sie ein Wert in einem Feld (906) in einer Protokolldateneinheit, PDU, ist, die so konfiguriert ist, dass sie von der Empfangsvorrichtung (102) empfangen wird, wobei die PDU so konfiguriert ist, dass sie eine Steuer-PDU eines Paketdatenkonvergenzprotokolls, PDCP, ist,
- Rücksetzen des Puffers basierend auf der Anzeige, die dazu konfiguriert ist, empfangen zu werden, und wobei die Anzeige so konfiguriert ist, dass sie eine dritte Anzeige ist,
- Senden einer vierten Anzeige an die Empfangsvorrichtung (102), wobei die vierte Anzeige so konfiguriert ist, dass sie anzeigt, dass die Pufferrücksetzung durchgeführt wurde.

14. Sendevorrichtung (101) nach Anspruch 13, wobei die Sendevorrichtung (101) vor dem Empfangen der dritten Anzeige von der Empfangsvorrichtung ferner konfiguriert ist zum:
- Empfangen einer ersten Anzeige von der Empfangsvorrichtung (102), wobei die erste Anzeige so konfiguriert ist, dass sie eine Präferenz für die Sendevorrichtung (101) zum Aktivieren oder Deaktivieren eines Uplink-Datenkompressionsmerkmals anzeigt.

15. Sendevorrichtung (101) nach Anspruch 14, wobei die PDU so konfiguriert ist, dass sie eine zweite PDU ist, und wobei die erste Anzeige so konfiguriert ist, dass sie mindestens eines ist von:
a. einem ersten Wert in einem ersten Feld (602) einer ersten PDU, wobei das erste Feld (602) so konfiguriert ist, dass es einen Typ der PDU anzeigt, und
b. einem zweiten Wert in einem zweiten Feld (604, 705) der ersten PDU, wobei das zweite Feld (604, 705) so konfiguriert ist, dass es mindestens eines anzeigt von: a) einem Aktivieren/Deaktivieren-,A/D-,Zustand und b) einem Zustand normalen Betriebs/temporärer Deaktivierung.

16. Sendevorrichtung (101) nach einem der Ansprüche 13 bis 15, wobei die Sendevorrichtung (101) vor dem Empfangen der dritten Anzeige von der Empfangsvorrichtung (102) ferner konfiguriert ist zum:
- Senden einer zweiten Anzeige an eine Empfangsvorrichtung (102), die zum Betrieb im Kommunikationsnetzwerk (100) konfiguriert ist, wobei die zweite Anzeige so konfiguriert ist, dass sie in einer Steuer-PDU enthalten ist, wobei die zweite Anzeige so konfiguriert ist, dass sie eines von Folgendem anzeigt:
a) ein Uplink-Datenkompressionsmerkmal wird in der Sendevorrichtung (101) aktiviert und ein Header mit Informationen über das aktivierte Uplink-Datenkompressionsmerkmal einer oder mehrerer Daten-PDUs muss in der einen oder den mehreren Daten-PDUs vorhanden sein, die so konfiguriert sind, dass sie von der Sendevorrichtung (101) nach dem Senden der zweiten Anzeige gesendet werden sollen, und
b) das Uplink-Datenkompressionsmerkmal wird in der Sendevorrichtung (101) deaktiviert und der Header mit Informationen über das aktivierte Uplink-Datenkompressionsmerkmal einer oder mehrerer Daten-PDUs muss in der einen oder den mehreren Daten-PDUs fehlen, die so konfiguriert sind, dass sie von der Sendevorrichtung (101) nach dem Senden der zweiten Anzeige gesendet werden.

17. Sendevorrichtung (101) nach Anspruch 16, wobei die zweite Anzeige so konfiguriert ist, dass sie eines ist von:
a. einem dritten Wert in einem dritten Feld (802) der Steuer-PDU, wobei das dritte Feld (802) so konfiguriert ist, dass es einen Typ von PDU anzeigt, und
b. einem vierten Wert in einem vierten Feld (803) der Steuer-PDU, wobei das vierte Feld (803) so konfiguriert ist, dass es einen Aktiviert/Deaktiviert-,E/D-,Zustand anzeigt.

18. Empfangsvorrichtung (102), die zum Betrieb in einem Kommunikationsnetzwerk (100) konfiguriert ist, wobei die Empfangsvorrichtung (102) ferner konfiguriert ist zum:
- Senden einer Anzeige an eine Sendevorrichtung (101), die zum Betrieb im Kommunikationsnetzwerk (100) konfiguriert ist, wobei die Anzeige so konfiguriert ist, dass sie die Sendevorrichtung (101) zum Durchführen einer Pufferrücksetzung anweist, wobei die Anzeige so konfiguriert ist, dass sie ein Wert in einem Feld (906) in einer Protokolldateneinheit, PDU, ist, die so konfiguriert ist, dass sie an die Sendevorrichtung (101) gesendet wird, wobei die PDU so konfiguriert ist, dass sie eine Steuer-PDU eines Paketdatenkonvergenzprotokolls, PDCP, ist, wobei die Anzeige so konfiguriert ist, dass sie eine dritte Anzeige ist,
- Empfangen einer vierten Anzeige von der Sendevorrichtung (101), wobei die vierte Anzeige so konfiguriert ist, dass sie anzeigt, dass die Pufferrücksetzung durchgeführt wurde.

19. Empfangsvorrichtung (102) nach Anspruch 18, wobei die Empfangsvorrichtung (102) vor dem Senden der dritten Anzeige an die Sendevorrichtung ferner konfiguriert ist (101) zum:
- Senden einer ersten Anzeige an die Sendevorrichtung (101), wobei die erste Anzeige so konfiguriert ist, dass sie eine Präferenz für die Sendevorrichtung (101) zum Aktivieren oder Deaktivieren eines Uplink-Datenkompressionsmerkmals anzeigt.

20. Empfangsvorrichtung (102) nach Anspruch 19, wobei die PDU so konfiguriert ist, dass sie eine zweite PDU ist, und wobei die erste Anzeige so konfiguriert ist, dass sie mindestens eines ist von:
a. einem ersten Wert in einem ersten Feld (602) einer ersten PDU, wobei das erste Feld (602) so konfiguriert ist, dass es einen Typ der PDU anzeigt, und
b. einem zweiten Wert in einem zweiten Feld (604, 705) der ersten PDU, wobei das zweite Feld (604, 705) so konfiguriert ist, dass es mindestens eines anzeigt von: a) einem Aktivieren/Deaktivieren-,A/D-,Zustand und b) einem Zustand normalen Betriebs/temporärer Deaktivierung.

21. Empfangsvorrichtung (102) nach einem der Ansprüche 18 bis 20, wobei die Empfangsvorrichtung (102) vor dem Senden der dritten Anzeige an die Sendevorrichtung (101) ferner konfiguriert ist zum:
- Empfangen einer zweiten Anzeige von einer Sendevorrichtung (101), die zum Betrieb im Kommunikationsnetzwerk (100) konfiguriert ist, wobei die zweite Anzeige so konfiguriert ist, dass sie in einer Steuer-Paketdateneinheit, PDU, enthalten ist, wobei die zweite Anzeige so konfiguriert ist, dass sie eines von Folgendem anzeigt:
i. ein Uplink-Datenkompressionsmerkmal wird in der Sendevorrichtung (101) aktiviert und ein Header mit Informationen über das aktivierte Uplink-Datenkompressionsmerkmal einer oder mehrerer Daten-PDUs muss in der einen oder den mehreren Daten-PDUs vorhanden sein, die so konfiguriert sind, dass sie von der Sendevorrichtung (101) nach dem Empfangen der zweiten Anzeige empfangen werden sollen, und
ii. das Uplink-Datenkompressionsmerkmal wird in der Sendevorrichtung (101) deaktiviert und der Header mit Informationen über das aktivierte Uplink-Datenkompressionsmerkmal einer oder mehrerer Daten-PDUs muss in der einen oder den mehreren Daten-PDUs fehlen, die so konfiguriert sind, dass sie von der Sendevorrichtung (101) nach dem Empfangen der zweiten Anzeige empfangen werden sollen.

22. Empfangsvorrichtung (102) nach Anspruch 21, wobei die zweite Anzeige so konfiguriert ist, dass sie eines ist von:
a. einem dritten Wert in einem dritten Feld (802) der Steuer-PDU, wobei das dritte Feld (802) so konfiguriert ist, dass es einen Typ von PDU anzeigt, und
b. einem vierten Wert in einem vierten Feld (803) der Steuer-PDU, wobei das vierte Feld (803) so konfiguriert ist, dass es einen Aktiviert/Deaktiviert-,E/D-,Zustand anzeigt.

## Revendications

1. Procédé réalisé par un dispositif de transmission (101) fonctionnant dans un réseau de communication (100), le procédé comprenant :
- la réception (503) d'une indication depuis un dispositif de réception (102) fonctionnant dans le réseau de communication (100), l'indication instruisant au dispositif de transmission (101) de réaliser une réinitialisation de mémoire tampon, dans lequel l'indication est une valeur dans un champ (906) dans une unité de données de protocole, PDU, reçue depuis le dispositif de réception (102), dans lequel la PDU est une PDU de commande de protocole de convergence de données en paquets, PDCP,
- la réinitialisation (504) de la mémoire tampon, sur la base de l'indication reçue, dans lequel l'indication est une troisième indication, et
- l'envoi (505) d'une quatrième indication au dispositif de réception (102), la quatrième indication indiquant que la réinitialisation de mémoire tampon a été réalisée.

2. Procédé selon la revendication 1, dans lequel le procédé comprend en outre, avant la réception (503) de la troisième indication depuis le dispositif de réception (102) :
- la réception (501) d'une première indication depuis le dispositif de réception (102), la première indication indiquant une préférence au dispositif de transmission (101) pour activer ou désactiver une caractéristique de compression de données de liaison montante.

3. Procédé selon la revendication 2, dans lequel la première indication est au moins l'une parmi :
a. une première valeur dans un premier champ (602) d'une première PDU, le premier champ (602) indiquant un type de la PDU, et
b. une deuxième valeur dans un deuxième champ (604, 705) de la première PDU, le deuxième champ (604, 705) indiquant au moins l'un parmi : a) un état d'activation/désactivation, A/D, et b) un état de fonctionnement normal/désactivation provisoire.

4. Procédé selon l'une quelconque des revendications 1 à 3, et dans lequel le procédé comprend en outre, avant la réception (503) de la troisième indication depuis le dispositif de réception (102) :
- l'envoi (502) d'une deuxième indication au dispositif de réception (102), la deuxième indication étant comprise dans une PDU de commande, dans lequel la deuxième indication indique l'une parmi :
i. une caractéristique de compression de données de liaison montante est activée dans le dispositif de transmission (101) et un entête comprenant des informations relatives à la caractéristique de compression de données de liaison montante activée d'une ou plusieurs PDU de données doit être présent dans les une ou plusieurs PDU de données à envoyer par le dispositif de transmission (101) après l'envoi de la deuxième indication, et
ii. la caractéristique de compression de données de liaison montante est désactivée dans le dispositif de transmission (101) et l'en-tête comprenant des informations relatives à la caractéristique de compression de données de liaison montante activée d'une ou plusieurs PDU de données doit être absent dans les une ou plusieurs PDU de données à envoyer par le dispositif de transmission (101) après l'envoi de la deuxième indication.

5. Procédé selon la revendication 4, dans lequel la deuxième indication est l'une parmi :
a. une troisième valeur dans un troisième champ (802) de la PDU de commande, le troisième champ (802) indiquant un type de PDU, et
b. une quatrième valeur dans un quatrième champ (803) de la PDU de commande, le quatrième champ (803) indiquant un état activé/désactivé, E/D.

6. Procédé selon la revendication 4 ou 5, dans lequel la deuxième indication indique en outre l'un parmi :
a. un numéro de séquence d'un dernier paquet envoyé par le dispositif de transmission (101) avant un état activé ou désactivé du dispositif de transmission (101) commuté ;
b. un numéro de séquence d'un premier paquet envoyé par le dispositif de transmission (101) après l'état activé ou désactivé du dispositif de transmission (101) commuté.

7. Procédé réalisé par un dispositif de réception (102) fonctionnant dans un réseau de communication (100), le procédé comprenant :
- l'envoi (1003) d'une indication à un dispositif de transmission (101) fonctionnant dans le réseau de communication (100), l'indication instruisant au dispositif de transmission (101) de réaliser une réinitialisation de mémoire tampon, dans lequel l'indication est une valeur dans un champ (906) dans une unité de données de protocole, PDU, envoyée au dispositif de transmission (101), dans lequel la PDU est une PDU de commande de protocole de convergence de données en paquets, PDCP, dans lequel l'indication est une troisième indication, et
- la réception (1004) d'une quatrième indication depuis le dispositif de transmission (101), la quatrième indication indiquant que la réinitialisation de mémoire tampon a été réalisée.

8. Procédé selon la revendication 7, dans lequel le procédé comprend en outre, avant l'envoi (1003) de la troisième indication au dispositif de transmission (101) :
- l'envoi (1001) d'une première indication au dispositif de transmission (101), la première indication indiquant une préférence au dispositif de transmission (101) pour activer ou désactiver une caractéristique de compression de données de liaison montante.

9. Procédé selon la revendication 8, dans lequel une PDU est une deuxième PDU, et dans lequel la première indication est au moins l'une parmi :
a. une première valeur dans un premier champ (602) d'une première PDU, le premier champ (602) indiquant un type de la PDU, et
b. une deuxième valeur dans un deuxième champ (604, 705) de la première PDU, le deuxième champ (604, 705) indiquant au moins l'un parmi : a) un état d'activation/désactivation, A/D, et b) un état de fonctionnement normal/désactivation provisoire.

10. Procédé selon l'une quelconque des revendications 7 à 9, dans lequel le procédé comprend en outre, avant l'envoi (1003) de la troisième indication au dispositif de transmission (101) :
- la réception (1002) d'une deuxième indication depuis un dispositif de transmission (101) fonctionnant dans le réseau de communication (100), la deuxième indication étant comprise dans une PDU de commande, dans lequel la deuxième indication indique l'une parmi :
a) une caractéristique de compression de données de liaison montante est activée dans le dispositif de transmission (101) et un entête comprenant des informations relatives à la caractéristique de compression de données de liaison montante activée d'une ou plusieurs PDU de données doit être présent dans les une ou plusieurs PDU de données à recevoir depuis le dispositif de transmission (101) après la réception de la deuxième indication, et
b) la caractéristique de compression de données de liaison montante est désactivée dans le dispositif de transmission (101) et l'en-tête comprenant des informations relatives à la caractéristique de compression de données de liaison montante activée d'une ou plusieurs PDU de données doit être absent dans les une ou plusieurs PDU de données à recevoir depuis le dispositif de transmission (101) après la réception de la deuxième indication.

11. Procédé selon la revendication 10, dans lequel la deuxième indication est l'une parmi :
a. une troisième valeur dans un troisième champ (802) de la PDU de commande, le troisième champ (802) indiquant un type de PDU, et
b. une quatrième valeur dans un quatrième champ (803) de la PDU de commande, le quatrième champ (803) indiquant un état activé/désactivé, E/D.

12. Procédé selon la revendication 10 ou 11, dans lequel la deuxième indication indique en outre l'un parmi :
a. un numéro de séquence d'un dernier paquet envoyé par le dispositif de transmission (101) avant un état activé ou désactivé du dispositif de transmission (101) commuté ;
b. un numéro de séquence d'un premier paquet envoyé par le dispositif de transmission (101) après l'état activé ou désactivé du dispositif de transmission (101) commuté.

13. Dispositif de transmission (101) configuré pour fonctionner dans un réseau de communication (100), le dispositif de transmission (101) étant en outre configuré pour :
- recevoir une indication depuis un dispositif de réception (102) configuré pour fonctionner dans le réseau de communication (100), l'indication étant configurée pour instruire au dispositif de transmission (101) de réaliser une réinitialisation de mémoire tampon, dans lequel l'indication est configurée pour être une valeur dans un champ (906) dans une unité de données de protocole, PDU, configurée pour être reçue depuis le dispositif de réception (102), dans lequel la PDU est configurée pour être une PDU de commande de protocole de convergence de données en paquets, PDCP,
- réinitialiser la mémoire tampon, sur la base de l'indication configurée pour être reçue, et dans lequel l'indication est configurée pour être une troisième indication,
- envoyer une quatrième indication au dispositif de réception (102), la quatrième indication étant configurée pour indiquer que la réinitialisation de mémoire tampon a été réalisée.

14. Dispositif de transmission (101) selon la revendication 13, dans lequel le dispositif de transmission (101) est en outre configuré pour, avant la réception de la troisième indication depuis le dispositif de réception :
- recevoir une première indication depuis le dispositif de réception (102), la première indication étant configurée pour indiquer une préférence au dispositif de transmission (101) pour activer ou désactiver une caractéristique de compression de données de liaison montante.

15. Dispositif de transmission (101) selon la revendication 14, dans lequel une PDU est configurée pour être une deuxième PDU, et dans lequel la première indication est configurée pour être au moins l'une parmi :
a. une première valeur dans un premier champ (602) d'une première PDU, le premier champ (602) étant configuré pour indiquer un type de la PDU, et
b. une deuxième valeur dans un deuxième champ (604, 705) de la première PDU, le deuxième champ (604, 705) étant configuré pour indiquer au moins l'un parmi : a) un état d'activation/désactivation, A/D, et b) un état de fonctionnement normal/désactivation provisoire.

16. Dispositif de transmission (101) selon l'une quelconque des revendications 13 à 15, dans lequel le dispositif de transmission (101) est en outre configuré pour, avant la réception de la troisième indication depuis le dispositif de réception (102) :
- envoyer une deuxième indication à un dispositif de réception (102) configuré pour fonctionner dans le réseau de communication (100), la deuxième indication étant configurée pour être comprise dans une PDU de commande, dans lequel la deuxième indication est configurée pour indiquer l'une parmi :
a) une caractéristique de compression de données de liaison montante est activée dans le dispositif de transmission (101) et un entête comprenant des informations relatives à la caractéristique de compression de données de liaison montante activée d'une ou plusieurs PDU de données doit être présent dans les une ou plusieurs PDU de données configurées pour être envoyées par le dispositif de transmission (101) après l'envoi de la deuxième indication, et
b) la caractéristique de compression de données de liaison montante est désactivée dans le dispositif de transmission (101) et l'en-tête comprenant des informations relatives à la caractéristique de compression de données de liaison montante activée d'une ou plusieurs PDU de données doit être absent dans les une ou plusieurs PDU de données configurées pour être envoyées par le dispositif de transmission (101) après l'envoi de la deuxième indication.

17. Dispositif de transmission (101) selon la revendication 16, dans lequel la deuxième indication est configurée pour être l'une parmi :
a. une troisième valeur dans un troisième champ (802) de la PDU de commande, le troisième champ (802) étant configuré pour indiquer un type de PDU, et
b. une quatrième valeur dans un quatrième champ (803) de la PDU de commande, le quatrième champ (803) étant configuré pour indiquer un état activé/désactivé, E/D.

18. Dispositif de réception (102) configuré pour fonctionner dans un réseau de communication (100), le dispositif de réception (102) étant en outre configuré pour :
- envoyer une indication à un dispositif de transmission (101) configuré pour fonctionner dans le réseau de communication (100), l'indication étant configurée pour instruire au dispositif de transmission (101) de réaliser une réinitialisation de mémoire tampon, dans lequel l'indication est configurée pour être une valeur dans un champ (906) dans une unité de données de protocole, PDU, configurée pour être envoyée au dispositif de transmission (101), dans lequel la PDU est configurée pour être une PDU de commande de protocole de convergence de données en paquets, PDCP, et dans lequel l'indication est configurée pour être une troisième indication,
- recevoir une quatrième indication depuis le dispositif de transmission (101), la quatrième indication étant configurée pour indiquer que la réinitialisation de mémoire tampon a été réalisée.

19. Dispositif de réception (102) selon la revendication 18, dans lequel le dispositif de réception (102) est en outre configuré pour, avant l'envoi de la troisième indication au dispositif de transmission (101) :
- envoyer une première indication au dispositif de transmission (101), la première indication étant configurée pour indiquer une préférence au dispositif de transmission (101) pour activer ou désactiver une caractéristique de compression de données de liaison montante.

20. Dispositif de réception (102) selon la revendication 19, dans lequel une PDU est configurée pour être une deuxième PDU, et dans lequel la première indication est configurée pour être au moins l'une parmi :
a. une première valeur dans un premier champ (602) d'une première PDU, le premier champ (602) étant configuré pour indiquer un type de la PDU, et
b. une deuxième valeur dans un deuxième champ (604, 705) de la première PDU, le deuxième champ (604, 705) étant configuré pour indiquer au moins l'un parmi : a) un état d'activation/désactivation, A/D, et b) un état de fonctionnement normal/désactivation provisoire.

21. Dispositif de réception (102) selon l'une quelconque des revendications 18 à 20, dans lequel le dispositif de réception (102) est en outre configuré pour, avant l'envoi de la troisième indication au dispositif de transmission (101) :
- recevoir une deuxième indication depuis un dispositif de transmission (101) configuré pour fonctionner dans le réseau de communication (100), la deuxième indication étant configurée pour être comprise dans une unité de données de protocole, PDU, de commande, dans lequel la deuxième indication est configurée pour indiquer l'une parmi :
i. une caractéristique de compression de données de liaison montante est activée dans le dispositif de transmission (101) et un entête comprenant des informations relatives à la caractéristique de compression de données de liaison montante activée d'une ou plusieurs PDU de données doit être présent dans les une ou plusieurs PDU de données configurées pour être reçues depuis le dispositif de transmission (101) après la réception de la deuxième indication, et
ii. la caractéristique de compression de données de liaison montante est désactivée dans le dispositif de transmission (101) et l'en-tête comprenant des informations relatives à la caractéristique de compression de données de liaison montante activée d'une ou plusieurs PDU de données doit être absent dans les une ou plusieurs PDU de données configurées pour être reçues depuis le dispositif de transmission (101) après la réception de la deuxième indication.

22. Dispositif de réception (102) selon la revendication 21, dans lequel la deuxième indication est configurée pour être l'une parmi :
a. une troisième valeur dans un troisième champ (802) de la PDU de commande, le troisième champ (802) étant configuré pour indiquer un type de PDU, et
b. une quatrième valeur dans un quatrième champ (803) de la PDU de commande, le quatrième champ (803) étant configuré pour indiquer un état activé/désactivé, E/D.
